# EUROPEAN PATENT SPECIFICATION

(11) **EP 1 371 205 B1**
(45) Date of publication and mention of the grant of the patent: **01.03.2006**
(21) Application number: 01997164.7
(22) Date of filing: 26.10.2001
(51) Int. Cl.: H04L 29/06

(54) **Initial viewing period for authorization of multimedia content**
Anfängliche Betrachtungsperiode für die Autorisierung von Multimedia-Inhalten
Periode initiale de visionnement pour l'autorisation d'un contenu multemedia

(30) Priority: 26.10.2000 US 243925 P
(43) Date of publication of application: 17.12.2003
(73) Proprietor: GENERAL INSTRUMENT CORPORATION, Horsham, Pennsylvania 19044 (US)
(72) Inventor: PETERKA, Petr, San Diego, CA 92130 (US); MORONEY, Paul, Olivenhain, CA 92024 (US); SPRUNK, Eric, Carlsbad, CA 92009 (US); MEDVINSKY, Alexander, San Diego, CA 92129 (US)
(74) Representative: Bohnenberger, Johannes
(86) International application number: PCT/US2001/051051
(87) International publication number: WO 2002/062054

(56) References cited:
- WO-A-99/07150
- GUILLOU L C ET AL: "ENCIPHERMENT AND CONDITIONAL ACCESS" SMPTE JOURNAL, SMPTE INC. SCARSDALE, N.Y, US, vol. 103, no. 6, 1 June 1994 (1994-06-01), pages 398-406, XP000457575 ISSN: 0036-1682
- TSUBAKIYAMA H ET AL: "Security for information data broadcasting system with conditional-access control" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 164-170, XP010109699 ISBN: 0-7803-0917-0

## Description

This invention relates generally to the area of multicasting networks. More specifically, the invention relates to providing a preview portion of a program distributed to clients on the network.

### BACKGROUND

There are a variety of systems for distributing content, such as audiovisual content, to users across networks. One example is pay-per-view programming in which a user pays for a program prior to viewing it. Another example is subscription based programming in which a user pays a subscription to a service provider in order to receive the programming for a particular channel for a prearranged period of time. For example, HBO™ or SHOWTIME™ are examples of subscription based programs in which a user pays a monthly fee in order to receive any programs broadcast on the designated channel for those programs. Therefore, the user is not required to pay for each individual show or event that occurs on those particular channels. Rather the subscription payment covers all programming.

With the advent of multicasting networks, program content such as movies and music can now be distributed in multicast transmissions across networks. For example, a server can multicast a movie across the internet to client computers. This can be accomplished by distributing the content to the address of each client simultaneously. However, no cryptographic system appears to be in place to facilitate the commercialization of such transmissions. Namely, no cryptographic system appears to be in use which allows a user to preview a program that will later become encrypted and unavailable to the user.

As a result, most multicast transmissions must be transmitted to a set of clients that are known ahead of time to be interested in the program content. This reduces the commercial benefit to the program content provider in that the program content provider can not entice other interested viewers into purchasing the program by providing a free preview of the program.
The document **WO9907150** discloses a cable television system which provides conditional access to services. The service instances are encrypted using public and/or private keys provided by service providers or central authorization agents. Keys used by the set tops for selective decryption may also be public or private in nature, and such keys may be reassigned at different times to provide a cable television system in which piracy concerns are minimized.
Up to a certain maximum amount, interactive services can be used without authorisation. "Free previews" are possible.

### SUMMARY

The subject matter of the present application is defined in the appended claims.

### BRIEF DESCRIPTION OF THE DRAWINGS

Fig. 1 is a block diagram of an embodiment of a content distribution system such as those used for multicasting program content over the internet.

Fig. 2 is a block diagram of an embodiment of a client computer portion of the content distribution system shown in Fig. 1.

Fig. 3 is a flow chart illustrating one embodiment of the invention for providing a free preview to a client.

Fig. 4 is a flow chart illustrating another embodiment of the invention for providing free preview content.

Fig. 5 is a flow chart illustrating an embodiment of the invention for distributing an unencrypted portion of a program and an encrypted portion of a program.

Fig. 6 is a flow chart illustrating an embodiment of the invention to allow a free preview to be displayed.

Figs. 7A and 7B are graphs showing exemplary distribution of cryptographic keys during portions of a program.

Fig. 8 illustrates a flow chart for distributing keys under one embodiment of the invention.

Fig. 9 illustrates another flow chart for distributing keys according to another embodiment of the invention.

Fig. 10 illustrates a flow chart for one embodiment of the invention in which keys are multicast to multiple clients.

Fig. 11 illustrates a flow chart demonstrating an embodiment of the invention in which clients request keys from a server for receiving multicast content.

Fig. 12 illustrates an embodiment of the invention for distributing keys to clients in which clients can send a confirmation message that a key was received.

Fig. 13 illustrates a flow chart for an embodiment of the invention in which a list of active participants receiving a program is created and clients send confirmation messages indicating that they should remain on the list.

Fig. 14 illustrates a flow chart for an embodiment of the invention in which a modified RTP packet is created for signaling cryptographic key changes.

Fig. 15 illustrates a flow chart according to one embodiment of the invention for providing a common key to clients in a multicast system.

Figs. 16A and 16B illustrate a flow chart according to one embodiment of the invention for providing an initial preview of program content.

Fig. 17 illustrates a flow chart according to one embodiment of the invention for providing an adjustable initial key distribution period for purchasing program content.

Fig. 18 illustrates a flow chart according to one embodiment of the invention for providing uninterrupted viewing by a late purchasing client for program content.

Fig. 19 shows a network for use in accordance with one embodiment of the invention.

Figs. 20A and 20B illustrate a flow chart for conveying data records from an origin content server to a cacheing server according to one embodiment of the invention.

Fig. 21 illustrates a flow chart according to one embodiment of the invention which provides for determining whether a client is entitled to program content based on at least one rule associated with the program content for use by a cacheing server.

Fig. 22 illustrates a data structure according to one embodiment of the invention for conveying information from an origin content server to a cacheing server.

Fig. 23 illustrates a data record according to one embodiment of the invention that can be provided for an individual client to define that particular client's entitlements to different program content.

### DESCRIPTION OF THE SPECIFIC EMBODIMENTS

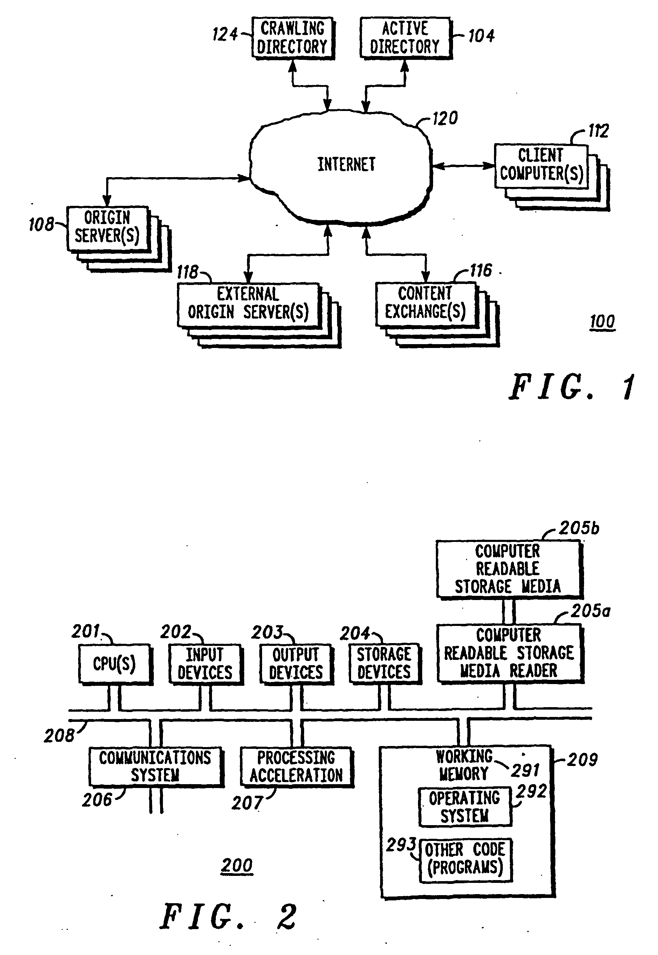

Referring to Fig. 1, a block diagram of a content distribution system 100 is shown. In this embodiment, the content distribution system 100 includes an active directory 104, one or more origin servers 108, one or more client computers 112, one or more content exchanges 116, one or more external origin servers 118, a network such as the internet 120, and a crawling directory 124. A particular client computer 112 is shown interacting with the active directory 104 to select a content object for downloading. The object can be played during download if it is a streaming media or can be stored for later display. The content object could be various types of information, such as audio, video, or data that is available to be downloaded from the network. Furthermore, it can be used for multicasting and/or unicasting.

In some embodiments, the origin servers 108 determine the preferred source to direct the client computers in order to download content objects. The preference of the client computer 112 and the location of copies of the content object are all considerations that the origin server 108 can use in redirecting the client computer to a preferred source of information. That source can be origin server 108 itself or one of the content exchanges 116.

Content objects of an external origin server 118 can be preloaded to a content exchange(s) allocated to provide those content objects. To decrease latency when a content object is requested for the first time, the active directory 104 can call the external origin server 118 to determine the content objects available from the external origin server 118. The available content objects may be added to the crawling directory 124. Once the available content objects are known, the active directory 104 can request each content object from the associated content exchange(s) in order to cause loading of each content object on the associated content exchange(s). In this way, content objects can be preloaded on the associated content exchanges.

FIG. 2 broadly illustrates how individual system elements from Fig. 1 can be implemented in a separated or more integrated manner within various, generally similarly configured processing systems. System 200 is shown comprised of hardware elements that are electrically coupled via bus 208, including a processor 201, input device 202, output device 203, storage device 204, computer-readable storage media reader 205a, communications system 206 processing acceleration (e.g., DSP or special-purpose processors) 207 and memory 209. Computer-readable storage media reader 205a is further connected to computer-readable storage media 205b, the combination comprehensively representing remote, local, fixed and/or removable storage devices plus storage media, memory, etc. for temporarily and/or more permanently containing computer-readable information, which can include storage device 204, memory 209 and/or any other such accessible system 200 resource. System 200 also comprises software elements (shown as being currently located within working memory 291) including an operating system 292 and other code 293, such as programs, applets, data and the like.

System 200 is desirable as an implementation alternative largely due to its extensive flexibility and configurability. Thus, for example, a single architecture might be utilized to implement one or more servers that can be further configured in accordance with currently desirable protocols, protocol variations, extensions, etc. However, it will be apparent to those skilled in the art that substantial variations may well be utilized in accordance with more specific application requirements. For example, one or more elements might be implemented as sub-elements within a system 200 component (e.g. within communications system 206). Customized hardware might also be utilized and/or particular elements might be implemented in hardware, software (including so-called "portable software," such as applets) or both. Further, while connection to other computing devices such as network input/output devices (not shown) may be employed, it is to be understood that wired, wireless, modem and/or other connection or connections to other computing devices might also be utilized. Distributed processing, multiple site viewing, information forwarding, collaboration, remote information retrieval and merging, and related capabilities are each contemplated. Operating system utilization will also vary depending on the particular host devices and/or process types (e.g. computer, appliance, portable device, etc.) and certainly not all system 200 components will be required in all cases.

The network of Fig. 1 can be implemented in a variety of ways. For example, according to one embodiment, we can assume the use of User Datagram Protocol (UDP) which can carry "Real-Time Transport Protocol"/'Real-Time Control Protocol"(RTP/RTCP) "Internet Group Management Protocol" (IGMP), "Real-Time Streaming Protocol" (RTSP) and possibly "Session Announcement Protocol"/"Session Description Protocol"(SAP/SDP). Furthermore, for purposes of multicast addressing, it can be assumed that multicast IP address allocation and assignment is transparent to any internet protocol rights management system. The session description can be distributed using either SAP protocol, RTSP ANNOUNCE command or via HTTP. Also, as a business model, it can be assumed that pay-per-view, subscription, and pay-by-time are all desirable purchase options. Furthermore, it is assumed that TV-like channel surfing is an expected user experience for broadcast like multicast distribution.

The following terms used in this patent can be understood as follows:

Content Provider - An entity that distributes content, e.g., to the caching servers while not necessarily consuming content.

Consumer - An entity that consumes content obtained from a caching server and optionally redistributes content to other consumers in the system. The roles of consumer, caching server, and content provider can be viewed as a matrix of content sources and sinks, related by allowed behaviors and transfers.

Program - A piece of specifically identified content with a beginning and an end.

Service - A continuous collection of programs on the same stream.

Ongoing Program - A program that does not have a specifically defined beginning and end, which viewers usually join and leave at any time. This is suitable for "home shopping," "fashion shows," ongoing sports content, etc.

Purchase Option - A mechanism allowing a client to purchase content.

Subscription - A purchase mechanism in which the client registers and possibly pays for the content substantially ahead of time. The client typically gets authorized for more than one program (e.g., the entire service). When only a single program is authorized, it is known as Call-ahead PPV.

Pay-Per-View (PPV) - A purchase mechanism in which the client registers and pays for a single program or package at a time. This mechanism can be network-enabled, or locally enabled. In the network-enabled case, the client contacts the infrastructure once a purchase is desired, and the infrastructure enables the purchase. This approach often has scaling problems, due to peak demand prior to a program. In the locally enabled case, often called "IPPV", or "Impulse" PPV, the client itself makes the purchase locally, and stores a record of the purchase. At some later time, the record is reported to the infrastructure systems for billing. This approach is effective when events are being multicast, for example, as there is no spike of demand hitting the network prior to the program start. Also, in the locally enabled case, the client can view the content immediately, as there are no network latency or message exchange delays. In either case, PPV purchases are typically for an entire program, regardless of how much is actually watched.

Pay-By-Time (PBT) - A purchase mechanism in which the client pays for the time duration of the content that was actually watched. The discrete time increments may have different durations for different programs or services. PBT is limited to a small set of programs and services for which a viewer can tolerate random access without loss of perceived value. Some sporting and music events are of this type.

Pay-By-Quality (PBQ) - Content may be offered at a different quality (i.e., bit rates), either as separate streams or as layered streams with each additional layer adding quality to the content. The client may report the highest bit rate it can consume and be offered to purchase the content at that quality or less. The server may also adjust the rate in real time based on the immediate state of the network. If temporary network congestion is detected, the quality of the content may be decreased for a certain time period and then resume the advertised quality. The server may keep track of such occurrences and report them to the billing center, which could charge the user less than the original price. The client may also adjust the bit rate perceived by the user, in accordance with user selection. A thumbnail program, for example, has value to the user but not if its cost is equal to a full-screen, living room viewable program.

Purchase Timing - Clients may purchase content at different times:
Ahead of time - The client decides to purchase the content significantly ahead of time. Such a purchase may be associated with the entire service, such as Subscription, rather than a single program.
Just before, or during, the program - The client decides to purchase the content a short period of time before the beginning of the content, or during the content very near to the start.

Video On Demand - VOD is a point-to-point delivery system servicing a single consumer with a stream based on his individual selection of stored content. The consumer may invoke such functions as a 'pause', 'fast forward' and 'rewind' to tailor the viewing experience to his immediate needs.

Multicast - Multicast is similar to the existing TV broadcast. It delivers the same content to one or more consumers at the same time. This is usually scheduled and can be live content.

Free Preview - Free preview is a mechanism that allows the consumer to watch a small piece (e.g., several minutes) before he must pay for the content. This is used to attract users to content. Another use is to smooth-out periods of high server traffic, such as the beginning of a PPV event when most of the consumers are being registered for the content. The consumer may be allowed to watch while his credentials are being validated. (After the free preview period ends or if there is no preview, it is possible to further smooth-out periods of high server traffic by utilizing a separate group key known in advance to registered clients.) The free preview may be offered at a lower quality.

Origin Content Server (OCS) - Server at a content provider's computer that provides content, e.g., to a caching server.

### Purchase Models

In the point-to-point VOD delivery of content model, the purchase options are relatively simple, since each piece of content (an event) is negotiated separately. Therefore, the Pay-per-View model is suitable for point-to-point VOD delivery. Furthermore, since the consumer-server communication is typically a 2-way connection, the primary mechanism for negotiating access to the content is done before the content is viewed (as opposed to the store and forward IPPV mechanism employed in traditional systems).

The multicast model offers different mechanisms to sell content based on (1) consumer preferences, (2) the nature of the content or (3) the way the content is advertised.

### Pay-Per-View

Pay-per-view (TPV) in the multicast model can be similar to the point-to point VOD model in that a client purchases a single event. One difference is that the event is encrypted once and shared by multiple clients; therefore, a user's computer and the caching server do not negotiate a unique content encryption key per user.

Another difference is that there will be a large number of clients requesting access to the same event at the same time - the beginning of that event. This will generate a large load on the system within a relatively small time window. To allow for scalability, one can set up a free preview period to provide the caching server enough time to distribute the content encryption key to all participants.

The following example illustrates an embodiment of the pay-per-view model implementation. This PPV scenario is similar to the "content on demand" case in which the user determines what content to obtain and when to obtain it. If the origin content server (OCS) detects that the client is not subscribed, it will guide the client through a set of purchase options and other content access rules and restrictions. Once the client selects the purchase option, it will be included in the secure object. The secure object may also include all or a subset of the rules associated with the given piece of content.

The client delivers the secure object and a ticket with its own entitlement data (e.g. list of subscribed services, location, ability to pay for content, etc.) to the caching server. The caching server will examine the secure object and the ticket presented by the client to determine that the client selection from the secure object and the entitlement information from the ticket match the content access rules. If all rules are satisfied, the caching server will grant access to the requested content by delivering the content encryption key via the program key, e.g. the program key is delivered to the client using his unique key while the content key is encrypted under the program key.

### Subscription

In one embodiment, it can be assumed that there will be a large number (thousands or tens of thousands) of video-on-demand servers and a relatively smaller number (hundreds, possibly thousands) of servers which will offer multicast content. The subscription model is meaningful when there is a continuous stream of content available most of the time and the consumer tends to come back to it.

If the viewer subscribes to the service, the first time the viewer accesses that service the viewer can be given a service key which has a longer lifetime than a program key that would be assigned to a single program event. With this key, the viewer may come back to the service and watch the content without negotiating any new keys. This will help in creating the TV channel surfing experience.

One goal of a related embodiment for such a model is for the caching server to keep track of how many clients and when clients actually watched the content. If, for accounting purposes, a certain population of consumers is requested to contact the server every time it visits such a service analogous to the Nielsen viewer tracking for terrestrial television), those consumers' computers may not be given a service key but only a new program key. This would be a configuration or a subscription option included in the ticket.

Note that the subscription model may also be meaningful for the point-to-point VOD scenario as a flat monthly rate for video rental.

The following example illustrates one embodiment of a subscription model implementation. When an Origin Content Server (OCS) becomes part of the distribution network, it indicates whether it will provide VOD content or multicast content. If an option to subscribe is offered, a Provisioning Center will allocate one or more Service IDs to the OCS.

When the client/consumer wants to subscribe to this service, it will be required to provide a credit card number or any other suitable method for billing and its server ticket, for example in a Kerberos environment, will be updated with the list of subscribed services and other authorization data such as authorization, ability to pay, etc.

When the client/consumer initiates a connection to an OCS, it provides the following information: its unique consumer identifier, its purchase capability (an indication that the credit card number is on record and has been verified) and a list of services it is subscribed to. If the OCS is offering pay content, it first checks whether the client/consumer is capable of paying for the content. If the content is available on a subscription basis, the list of subscribed services is checked against the OCS's service ID(s). If the OCS is on the list, the purchase menus will be bypassed and the client will be redirected to the appropriate caching server. If the client is not subscribed to the service, it will be presented with the purchase options. In both cases, the OCS will create a secure object which can include the OCS Service ID, the Source ID, selected purchase method (e.g. subscription, PPV, PBT, etc.) and an indication of whether it is free or pay content, and other access rules.

When the client/consumer connects to the caching server that can serve the selected content, it will present the caching server ticket, which includes information about the client's identity, purchase capability and a list of subscribed services together with the secure object obtained from the OCS. Note that the client cannot read or alter either the ticket or the secure object from the OCS.

The caching server will compare the information from the secure object and the ticket. If the information matches, the client will be granted access to the content (it will be given the content encryption key - delivered directly or indirectly utilizing a Service Key in this case). Otherwise, access to the content will be denied. The caching server will also report the selected purchase option in the usage and billing data delivered to the Billing Service.

The client may cache the secure object and the Service Key so that when it leaves the service and subsequently comes back, it does not have to contact the OCS or the caching server again (which although transparent to the user, adds a delay to the acquisition time).

Note that the Subscription mode may be simulated by the PPV mode described below without using the Service Key. The caching server or the Billing System will detect that this client is a subscriber and therefore not bill for individual events on this service.

### Pay-By-Time

Pay-by-time (PBT) is suitable for content that does not have a well defined start or end time or a self-contained plot, such as fashion shows or sustained sports events (e.g. Olympics).

Some existing alternatives to this invention are based on a tree hierarchy of keys and an algorithm for rekeying subtrees of the hierarchy when a consumer leaves the group. These existing alternatives can handle large multicast groups but only if the frequency of consumers leaving the group is relatively low and well distributed over time. One embodiment of the invention on the other hand is designed to handle large peaks in the number of consumers trying to leave a multicast.

For a quasi-PBT approach, a caching server may divide the content into pay segments and assign segment keys to them. All consumer computers would negotiate a key for each segment in order to keep track of how may segments they watched. This generates a large load on the caching server on the segment boundaries. This can be mitigated with a key management approach where each rabbit is given keys to the current as well as the next segment. This will give the caching server enough time to distribute the next segment keys during the current segment.

The following example illustrates an embodiment of the pay-by-time model implementation. Some content may not be suitable to be sold as PPV. An example is content that does not have a well-defined beginning and end or a specific plot. This may include content such as fashion shows, certain types of sports events, etc. At the time the viewer negotiates the purchase options with the OCS, the viewer may choose to select the pay-by-time option if offered. The viewer will be told what the pay periods are and what the cost of each pay period is. The viewer's selection will be included in a secure object.

When the client negotiates encryption keys with the caching server, if will start receiving the multicast content. The client will monitor the expiration time for each pay period and request a new set of keys from the caching server. If the viewer stops watching or moves to another service the client will not request new keys or it will actively notify the caching server that it wants to leave the current multicast session. The caching server will record the time when each client joins and leaves the multicast for billing purposes.

### Free Preview

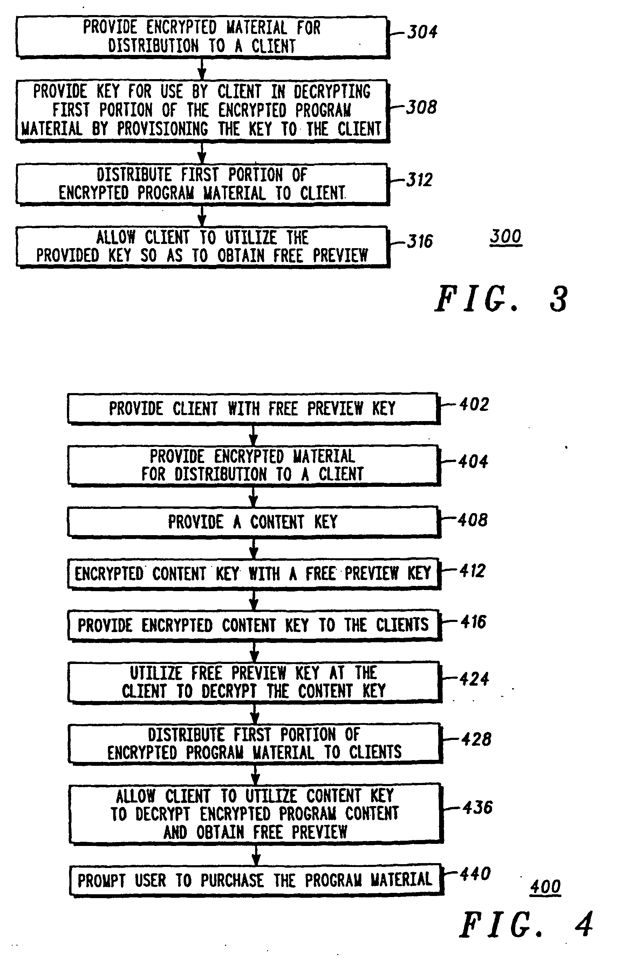

In one embodiment of the invention a free preview of a program can be provided to client computers in the multicasting system. Referring to Fig. 3, a flow chart 300 for implementing this embodiment of the invention can be seen. In block 304 encrypted material is provided for distribution to a client. For example, such encrypted material could be provided by a content exchange such as a metropolitan video exchange or an origin server from which the content originated. In block 308 a key is provided ahead of time, for example, during provisioning, for use by the client computer in decrypting the first portion of the encrypted program material. In block 312 of method 300, the first portion of the encrypted program material is distributed to at least one of the clients. Finally, in block 316 the client is allowed to utilize the key which has been provided to obtain the free preview portion of the program. Thus, until the program is encrypted with a different key, the client will be able to decrypt the program material and obtain a preview of the program without charge.

Thus, the service provider could allow a user to obtain a first portion of the program material by waiting to change the key of encryption for a predetermined amount of time. This would allow a user to view the preview through the use of the encryption key.

Fig. 4 illustrates yet another embodiment of the invention. In flow chart 400 of Fig. 4, a free preview key is provided ahead of time, e.g. during provisioning, to a client as shown in block 420. Encrypted material is provided for distribution to a client in block 404. In block 408 a content key is provided. The content key is encrypted with a free preview key as shown in block 412. The encrypted content key is then provided to the plurality of clients as shown by block 416. The clients can then utilize the free preview key at the client to decrypt the encrypted content key as shown in block 424. A first portion of the encrypted program material can be distributed to the plurality of clients as shown in block 428. The clients can then utilize the content key to decrypt the encrypted program content and thereby obtain a free preview of the program content as shown in block 436. During this process a user can be prompted via a display on the screen with an offer to purchase the program material 440. At that point in time, the user can indicate acceptance of the offer via a user interface and thereby purchase the program content. At that point in time a new key could be distributed to the user for use in decrypting the remaining encrypted portion of the program.

Alternatively, instead of delivering a content key encrypted with a Free Preview Key (FPK), the FPK may be used to directly encrypt the initial portion of the content, in which case the initial content key is the same in value as the FPK.

Yet another alternative is to distribute a Program Segment Key (PSK) that is encrypted with FPK. The PSK is then utilized to deliver the content key encrypted with PSK.

It should be understood that the various embodiments described in this patent may be accomplished with repeated acts during a program multicast, for example. Thus, in Fig. 4, blocks 412 and 428 can be repeated more than one time. Similarly, it should be understood that some acts described can take place at the same time. Again, for example, blocks 412 and 428 can occur at the same time. In addition, while some examples may describe a relationship between a server and a client, for the sake of simplicity, it should be understood that more than one client can participate.

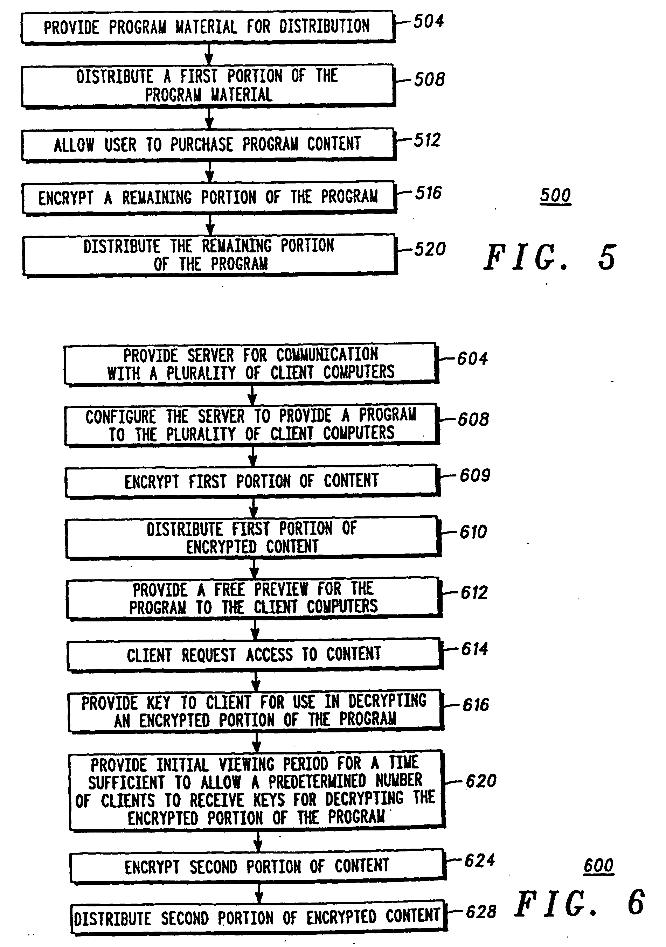

Referring to Fig. 5, yet another embodiment of the invention is shown. In method 500 of Fig. 5 program material is first provided for distribution as shown in block 504. A first portion of the program material is distributed across the network to client computers as shown in block 508. In block 512 the user is allowed to purchase the remaining program content. While the first portion of the program material is not encrypted, the remaining portion of the program is encrypted as shown in block 516. Thus a key can be provided, e.g., at a server, to encrypt this remaining portion of the program. In block 520 the remaining portion of the program is distributed to the client computers that requested the remaining program content in block 512 so as to prevent the remaining client computers from being able to receive or to view the encrypted remaining portion of the program without the proper decryption tools. Thus the user can be provided with a key that is operable to decrypt the encrypted portion of the program material. This is yet another method of providing a free preview in that the initial program material is distributed without encryption while the remaining portion is encrypted. Thus, the client computers do not require a decryption key to view the original portion of the program material. Thus, a user is free to view the initial portion of the program material and free to decide whether to purchase the remaining portion of the program or not.

Fig. 6 illustrates yet another embodiment of the invention. In method 600 of Fig. 6, a server is provided for communication with multiple client computers in block 604. The server is configured to provide a program of content material to the multiple client computers as illustrated in block 608. For example, a multi-casting arrangement could be implemented. In block 612, a free preview portion of the program is provided for viewing by the client computers. Suppose the client chose to purchase the remainder of the content towards the end of the free preview period. There is likely not enough time to communicate with the server, and receive the key necessary to decrypt the movie; thus the viewed content will stop, and then resume some time later after such keys have arrived. The initial viewing period concept invention provides a way to enable continuous viewing despite the latency in server key distribution. Block 620 illustrates that an initial viewing period can be provided for a period of time that is sufficient to allow a predetermined number of clients to receive keys for decrypting the encrypted portion of the program.

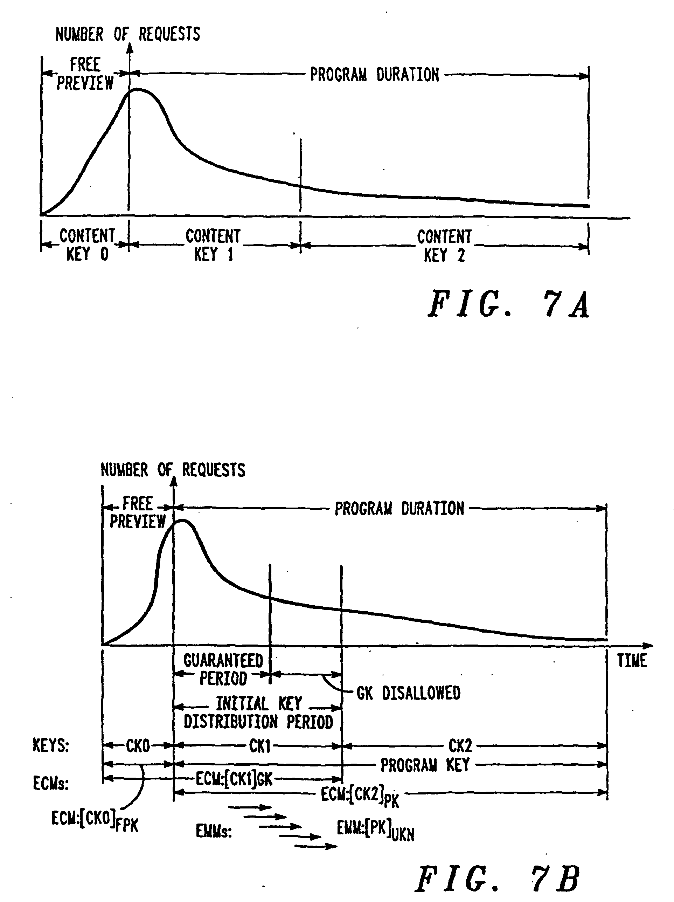

Fig. 7A illustrates a plot showing the number of requests for a program versus the program duration. As can be seen in Fig. 7A an initial free preview period provides for client computers to request an initial key for viewing an encrypted portion of the program. This number of requests will likely be high during the free preview period and then drop off during the remaining program duration. Thus, the free preview program period allows the system to accommodate the requests for keys during the initial viewing the program.

At the bottom of Fig. 7A, the distribution of content keys 0,1, and 2 is shown. Content key 0 is provided to the user in one embodiment for obtaining the free preview. Content keys 1 and 2 illustrate an example where only two keys are required to decrypt the remainder of the program content.

As an example, Key 0 may be a well-known free preview key, content encryption key encrypted under the free preview key, or the content may not be encrypted at all during the free-preview period. Key 1 would represent a group key itself or a content encryption key encrypted under the group key used during the initial viewing period. (In the latter case, block 616 serves to multicast the encrypted content key to the clients.) And, Key 2 would be the actual content encryption key delivered only to those clients that purchased the content. Thus clients that tune to the content first view a free preview, and make a decision to buy. Those who make such requests use the group key to allow their viewing experience to continue. The server would deliver the Key 2 during this time, so that those viewers could continue viewing the remainder of the content in a continuous fashion. Note that the concept of the initial viewing period applies whether or not the program has a free preview offered.

### Key Distribution

Under various distribution methods such as pay by time, pay per view, subscription based, etc., encryption keys can be distributed to clients to facilitate reception of the program content. One embodiment of the invention provides a multi-tier key hierarchy to accommodate the various purchase options such as pay per view or pay by time. In one embodiment of the invention, the different types of keys and their relationships can be configured as follows:

Unique Key (UK): For example, this could be a session key given to a client in a Kerberos environment by the Kerberos Key Distribution Center (KDC) during the ticket request message exchange. This key is unique per viewer and per session. The client keeps a list of multiple UKs; one for each caching server. Each UK is used to initiate the key request message exchange with a particular caching server. The UK can also be utilized to deliver an encrypted content key (CK), service key (SK), program key (PK) or program segment key (PSK).

Service Key (SK): This key spans more than one program epoch and is used as a subscription key with a duration from several days to several months. It is shared by all subscribers to the service but may differ between caching servers. If a client is subscribed to a service requested from a particular caching server, the first time the caching server is visited by the client, the SK is given to it during the key request message exchange encrypted using the client's UK. Once the client has the key, the client can decrypt the content of this service until the SK expires. At that time (or preferably adequately far enough in advance so as to avoid overloading the server) the client requests the next version of the SK from the caching server.

This mechanism allows clients with subscriptions to quickly acquire the service without negotiating keys with the caching server, thus reducing the load on the caching server. This assumes that the content encryption key, Program Segment Key, and Program Key are distributed often.

Program Key (PK): This key is valid for one program epoch. It is used to give access to an individual program event purchased using the pay -per-view option. Similar to the SK, it is given to the client during the key request message exchange. The PK can also be encrypted by the SK and distributed to all clients who possess the SK.

Program Segment Key (PSK): This key is used to divide a single program event or an entire service into purchasable segments. The PSKs are delivered either using unicast or multicast distribution. Clients using the pay-by-time purchase option will get the PSK using the key request message exchange. Clients using the PPV purchase option will receive the PSK encrypted under the PK using multicast distribution. Clients with a subscription may receive the PSK encrypted under the SK or PK using multicast distribution. (Alternatively, clients with a subscription may receive a CK encrypted directly under the SK.)

These segments may overlap in order to help scalability. Two PSKs are distributed at any given time: the current PSK and the next one. This allows clients to continue receiving the content while requesting the next set of PSKs from the caching server.

Content Key (CK): This key is used to encrypt the content itself. It should change at least as often as the PSK. It can be distributed in several ways, e.g.: (1) encrypted under the PSK for those viewers who select the pay-by-time option, (2) encrypted under the PK or UK for users who select the PPV option; or (3) encrypted under a SK for those who are subscribers to the service.

Group Key (GK): This key is used to distribute the CK or the PSK that in turn encrypts the CK for the initial viewing period. Clients will get the GK ahead of program events sold on PPV or PBT basis, for instance during provisioning. That will give the viewer the option to watch the beginning of the content while the client negotiates the other key(s) with the caching server.

Free Preview Key (FPK): This key is used to distribute the CK or the PSK that in turn encrypts the CK for the content during the initial free preview period. This may be a fixed key known to all clients or distributed during provisioning.

Table 1 shows various embodiments of the invention for distributing the various keys to clients. As shown in Table 1, only keys distributed to individual clients (shown as keys encrypted under the UK) using the UK are delivered in a unicast fashion. These unit-addressed messages fulfill the Entitlement Management Message (EMM) function. Alternatively, for improved efficiency multiple EMMs encrypted with different UKs may be combined into a single multicast message. Other keys can be encrypted only once for a group of authorized clients and multicast because they can be decrypted only by those clients who possess the higher level keys. These group-addressed multicast messages play the role of Entitlement Control Message (ECM) messages.

**Table 1**

| | PPV | Subscription | Pay-by-time |
|---|---|---|---|
| UK | | | |
| SK | | (SK)UK | |
| PK | (PK)UK | (PK)SK | |
| PSK | (PSK)GK or | Optional: (PSK)SK | (PSK) UK |
| | (PSK)PK or | or (PSK)PK | |
| | (PSK)FPK | | |
| CK | (CK)PK or | (CK)PSK or | (CK)PSK |
| | (CK)FPK or | (CK)SK or | (CK)FPK |
| | (CK)GK or | (CK)PK | (CK)GK |
| | (CK)UK | | |
| GK | (GK)UK or | | (GK)UK or |
| | provisioned | | provisioned |
| FPK | (FPK)UK or | | (FPK)UK or |
| | provisioned | | provisioned |

The different embodiments of the invention provide models for distributing the keys outlined above. For example a "Pull" model, a "Push" model, and a combination "Push-Pull" model could be utilized. Under the pull model, each client keeps track of the keys and their expiration times and actively requests new keys before the current keys expire so as to avoid service interruptions. Alternatively, the push model migrates the responsibility to the server which keeps track of active clients and distributes new keys to them before the current keys expire. Pure push models may also include some form of repeated distribution for reliability. For example, the pay per view purchase model can utilize the pull mode for key distribution since the server needs to know which client purchases the program in order to bill those clients. Content keys, i.e., the keys used to encrypt the program content itself, are not required to change during a pay per view event. A client can pull a program key which is used to encrypt the content key for that pay per view program. Thus, no other keys are required during the pay per view event; yet, the server can track which client pulled the key for receiving the pay per view event. Similarly, the subscription pay model in which a user pays a subscription price to receive a program over an extended period of time, can utilize the pull mode as well. For example, in the initial request under the subscription model, the client requests the subscription and pulls a service key encrypted under the unique key for that client. Then the subscription model allows the push mode to be utilized in that program keys for pay per view events or program segment keys for pay by time events are pushed out to the client encrypted under the service key. Similarly, the content key is pushed out to the client encrypted under the program segment key. Thus, the subscription model can utilize both the pull and push modes. The pull key distribution model, push key distribution model, and combination pull/push key distribution models are explained below in further detail.

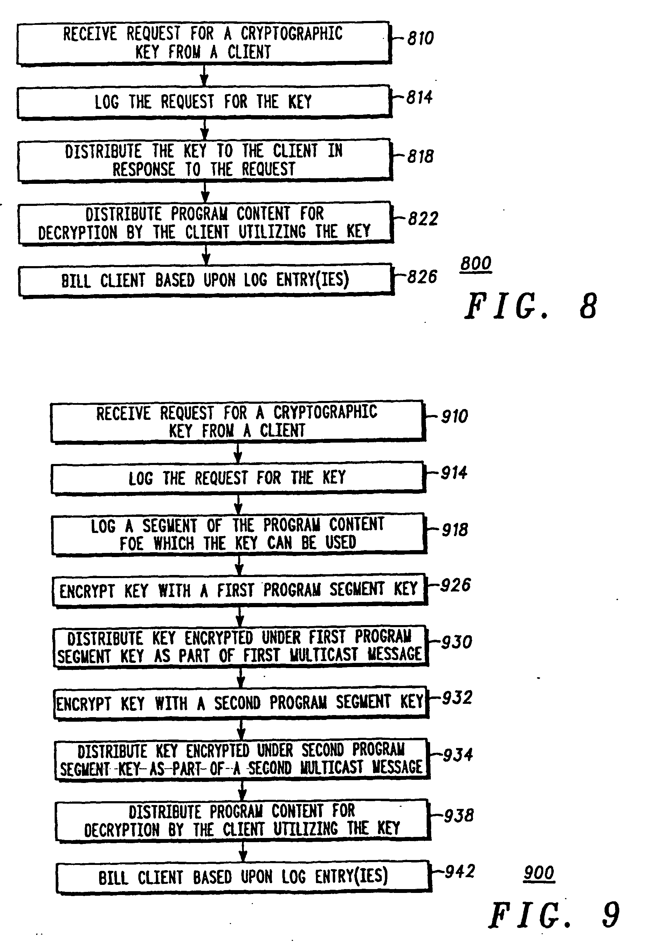

The pull key distribution model allows each client to actively request keys from the server. In Fig. 8, a flow chart 800 is illustrated for implementing a pull key distribution system. In block 810 a server receives a request for a cryptographic key from a client. The server logs the request for the key in block 814. For example, such a log entry could be made in a log such as a database maintained by the server. In block 818, the key and its expiration time are distributed to the client in response to the request by the client. Thus the server need not monitor the status of the client's keys; rather, the responsibility of determining when a new key is required can be passed to the client. In block 822, the program content is distributed for decryption by the client utilizing the cryptographic key that was requested. Finally, in block 826 the log entries can be utilized to bill the client based upon billing parameters of the billing arrangement.

Fig. 9 illustrates a flow chart 900 according to yet another embodiment of the invention. Method 900 illustrates, for example, that two program segment keys can be utilized to transmit the same content key to a client in two different multicast messages. Thus, if a user has not yet received a new program segment key, the content key can be obtained by utilizing the old program segment key. This "soft" key transition allows flexibility in the reception of the key updates. While this would allow clients who did not request the new program segment key to receive the next segment, it does prevent disruption of service for those clients who did request the new program segment key. This problem can be mitigated by dividing the program segment into smaller content encryption epochs.

Again, in block 910 a request is received from a client for a cryptographic key. The request for the key is logged as shown in block 914. In block 918 the segment of the program content for which the key can be used is logged in the log record. Again, the server need not monitor the need for a key by a client. Rather, the client can act independently of the server in requesting the key. In block 926, the desired key is encrypted with a first program segment key. In block 930 the encrypted key is distributed as part of a first multicast message. Alternatively, in a different embodiment the key can be unicast to the client. Thus, a unique key for a particular client could be used to distribute the new key to that particular client. The desired key is distributed as part of a second multicast message, as well. This is shown in block 934 in which the key is encrypted under a second program segment key and distributed as part of a second multicast message. In block 938, the program content is distributed for decryption by the client utilizing the transmitted key. Finally, in block 942 the client is billed based upon any log entries.

In logging the request for a key a server can log a variety of information about the request. For example, the time and segment the requested key was for can be recorded. These records can then be forwarded later to the billing system to analyze them in order to determine the length of content watched by each client The server does not have to keep track and actively distribute keys to clients; rather, it can simply wait for the client to request a new key.

Under a pull key distribution model, each client requests a new key and is individually responded to by the key distribution server. The server can maintain a list of active participants in a multicast session based on this first key request All clients on this list can then be periodically given new keys using a multicast UDP message which has a new program segment key encrypted for each participant using that participant's unique key. When a client decides to leave the multicast session, the client sends an authenticated request to the server asking to be removed from the list. This signals the server to log the time that the client stopped receiving the content so that the client will not be billed for later content. Thus, the client can be removed from the list of active participants and will not receive the next key update message. The client in theory might possess the key and be able to decrypt content; however, the server can issue new keys at regular intervals to the active participants so as to prevent the removed client from decrypting further content.

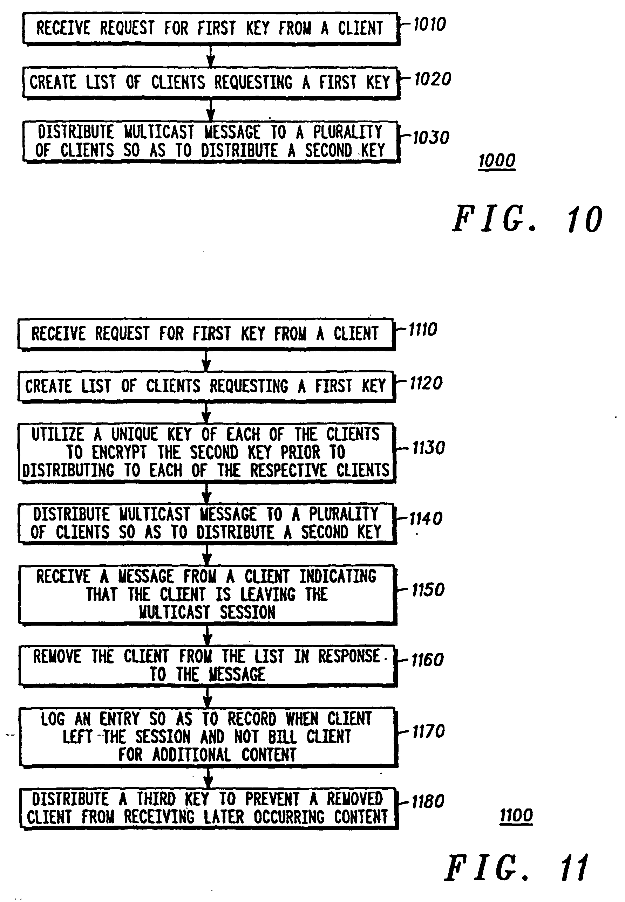

Under another embodiment of the invention, a push key distribution model can be implemented to distribute keys from a server to a client. Thus, Fig. 10 illustrates a flow chart 1000 for implementing a push key distribution model. In block 1010, a server receives a request for a first key from a client. In block 1020 the server creates a list of clients that have requested the first key. In block 1030 a multicast message is distributed to clients so as to distribute a second key that is directly or indirectly utilized in decrypting the program content.

Fig. 11 illustrates a flow chart 1100 that shows a more detailed embodiment to the method shown in Fig. 10. In block 1110 a request is received for a first key from a client. The server creates a list of clients requesting that first key in block 1120. In block 1130 a unique key of each of the clients is utilized to encrypt a second key prior to distributing that second key to each of the respective clients. The server then distributes a multicast message to the clients to distribute the second key, for example encrypted under each client's unique key, as shown in block 1140. In block 1150 a client indicates to the server that is leaving the multicast session. At this point, the client is removed from the list in response to the client's message as shown in block 1160. In block 1170 an entry is logged so as to record when the client left the session so that the client will not be billed for additional content. A third key is distributed to clients remaining on the list to prevent a removed client from receiving later occurring content as shown in block 1180. The third key can thus be distributed to clients remaining on the list. Thus, the first, second and third keys can be utilized as program segment keys for decrypting respective content keys for program content.

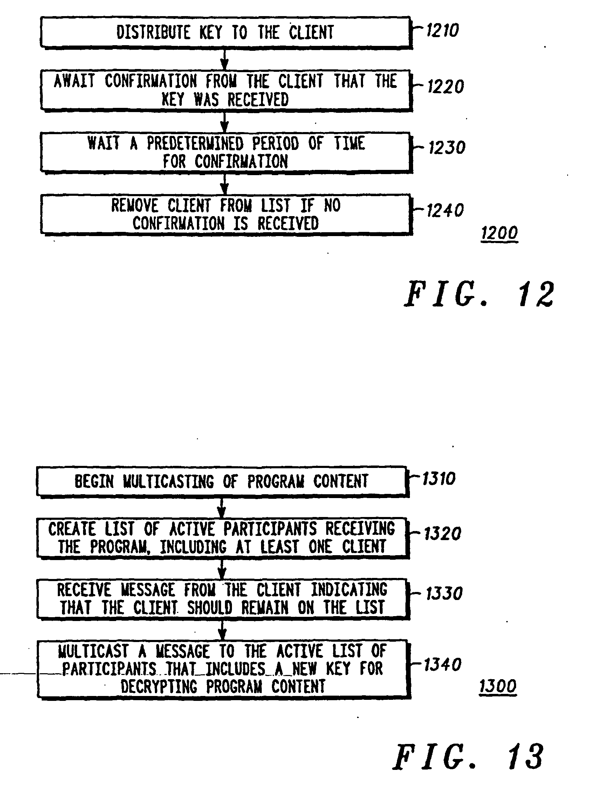

The push key model and pull key model can be combined in a combination model for distributing keys to clients. As shown in Fig. 12, a method 1200 can be utilized for this embodiment of the invention. In block 1210, a key is distributed to a client for use in decrypting program contents. The server which distributes the key awaits confirmation that the client received the key as shown in block 1220. In block 1230, the server waits for a predetermined period of time for the client to confirm that the key was received. If the confirmation message is not received by the server, the server removes the client from the list as shown in block 1240 such a confirmation message acts as a "heart-beat message". Thus, the server not only pushes keys out to the client, but also, it receives messages from each client similar to the pull mode.

One method of accomplishing this is for each client to send a "keep alive" message at least once during each program segment. The server will obtain a list of active participants and distribute new segment keys to them via a multicast UDP message with the new key encrypted under the various individual unique keys for each client. If a server does not see a "keep alive" message for the duration of a segment, it will remove the client from the active list. If for some reason the client does not send a "keep alive" message but wants to continue receiving the contents, it can monitor the expiration time of the program segment key and send an individual key update request before the key expires. Again, this is a way of implementing the ''pull'' aspect to the combination model. (It is also possible to define the "keep alive" interval to be longer than a single program segment.)

Fig. 13 illustrates a flow chart 1300 for implementing this embodiment of the invention. In block 1310 a server begins multicasting program content to a plurality of clients. In block 1320 a list of active participants is created showing which clients are receiving the program. In block 1330 a message is received from a client, such as a "keep alive" message indicating that the client should remain on the list. In block 1340 the server sends a multicast message to the list of active participants that includes a new key; e.g., program segment key, for decrypting the next segment of program content. When a client is removed from the list, a second list of active participants is thus created.

As part of the key distribution system, the content key is utilized for decrypting the program content throughout the course of the distribution of the program content. Thus, when a new content key is implemented, the implementation will be signaled to the clients so that the clients can begin utilizing the new content key with which they have been provided. Oftentimes the clients are provided with an encrypted version of the content key which is decrypted for example, with a program segment key. Similarly, that program segment key might be encrypted with a service key or even a unique key.

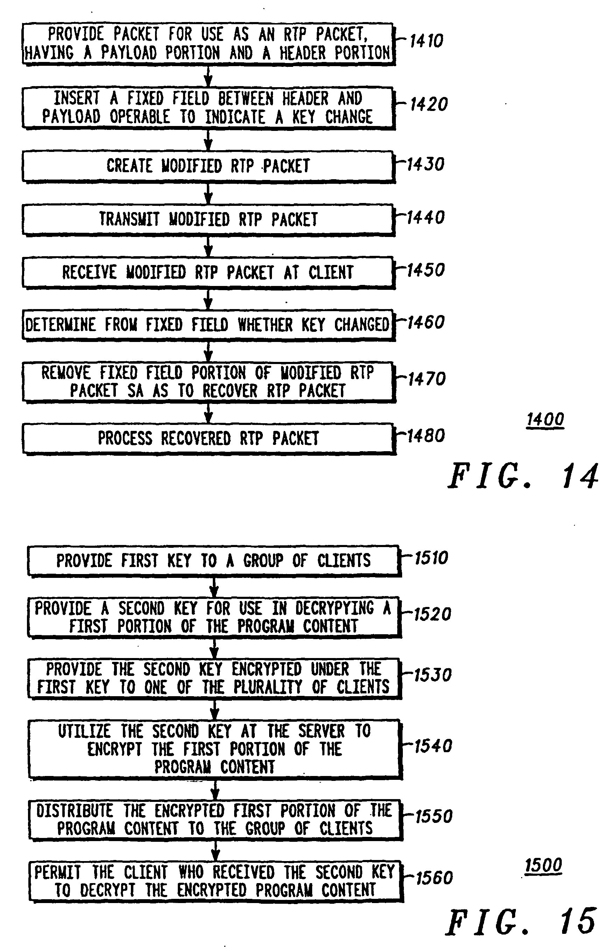

A signaling method can be used to indicate the implementation of a new key. For example, a predetermined bit can be used to indicate if an old or current content key should be used as opposed to a new content key which has recently been distributed to the client. Thus, a client can check the predetermined bit in a packet and determine the proper content key to use. As one example, if a single bit is used, a "1" could be used to indicate the current content key already in use, while a "0" could be used to indicate that the new content key should be used. Fig. 14 illustrates a flow chart 1400 for implementing a signaling method. Fig. 14 refers to use of an RTP packet for distributing program content; however, it could equally apply to other protocols utilized in distributing content. Thus, it merely exemplifies a method which could be implemented with other protocols, as well. In block 1410 a packet is provided for use as an RTP packet which has both the payload portion and header portion. In block 1420 a field is inserted between the header portion and the payload portion which is operable to indicate a key change. This could be a fixed field such as an extended header in which a predetermined value for that fixed field indicated that the content key for the payload portion of the packet has changed. Alternatively, it could indicate that the next occurring payload portion could be decrypted utilizing the new content key or such similar implementation. In block 1430 a modified RTP packet is created. This modified RTP packet is transmitted in block 1440 from the server to the client. The client receives the modified RTP packet as shown in block 1450 and determines from the inserted field whether the key has changed as shown in block 1460. Block 1470 removes the inserted field portion from the modified RTP packet and recovers the original RTP packet as shown in block 1470. Then the recovered RTP packet can be processed as shown in block 1480 and the packet can be decrypted using the current or the next key depending on the indicator in the extended header.

Other signaling methods could be utilized as well. For example, an RTP header extension could be utilized. In this way, the extended portion of the header could include at least the content key parity bit to indicate key changes.

Similarly, a payload specific marker bit could be utilized. This bit is already utilized in some payload types such as the MPEG 4 payload which uses the marker bit to indicate a beginning of a frame.

Furthermore, a padding bit could be utilized, for example. The padding bit in the RTP header could be utilized to indicate the key change. This assumes that the encryption method applied to RTP packets does not make use of any padding.

In multicasting program content such as audio and visual material, entitlement management messages and entitlement control messages can be sent from a server to client computer. One embodiment of the invention provides a format for such messages. Under this format, a sequence number or a time stamp to protect against replay attacks is provided. Furthermore, in another field of the EMM and ECM messages, a keyed message authentication code (MAC), or a public key digital signature for authentication is provided. Note that neither the keyed-hashing for message authentication (HMAC) nor the signature can be verified until a client performs the key request exchange. Yet another field would include the type of key included in the message, such as a content key, a group key, a program segment key, a service key, etc. Furthermore, a field would be provided for the type of key used to encrypt the key in the message. Thus, a unique key could be indicated for a message transmitting a service key, for example. Another field can be provided for the time remaining in the lifetime of the key. Furthermore, a key parity bit matching the parity bit in the RTP packet can be provided. Also, a user identification, which is often needed when multiple EMMs are delivered in a single multicast message, can be provided. Each field of the data structure applies to each of these fields. Thus, they can be arranged in any order such that the data structure includes one or more of these fields.

Fig. 7B illustrates an entitlement control message for a free preview period in which a content key CK0 is encoded with a free preview key (ECM: [CK0] FPK). Similarly, Fig. 7B shows an entitlement control message in which a content key is encoded with a group key (ECM: [CK1] GK). A second entitlement control message is shown conveying a second content key encrypted with the program key (ECM: [CK2] PK). Furthermore, several entitlement management messages are shown with new program keys encrypted with a Unique Key for a specific client computer. The PK can be unicast to individual clients. Alternatively, a single message could be created so as to form a concatenated message of program keys that is multicast to multiple clients. Thus, each client could parse and decrypt the new program key particular to that client.

Alternatively, CK0 does not need to be distributed inside an ECM. The value of FPK already possessed by the plurality of clients may be taken as CK0.

Alternatively, CK1 does not need to be distributed inside an ECM. The value of GK already possessed by the plurality of clients may be taken as CK1.

Alternatively, CK2 may be encrypted with the UK and delivered in the form of an EMM directly to the client instead of the ECM form shown on the figure.

### Initial Viewing Period

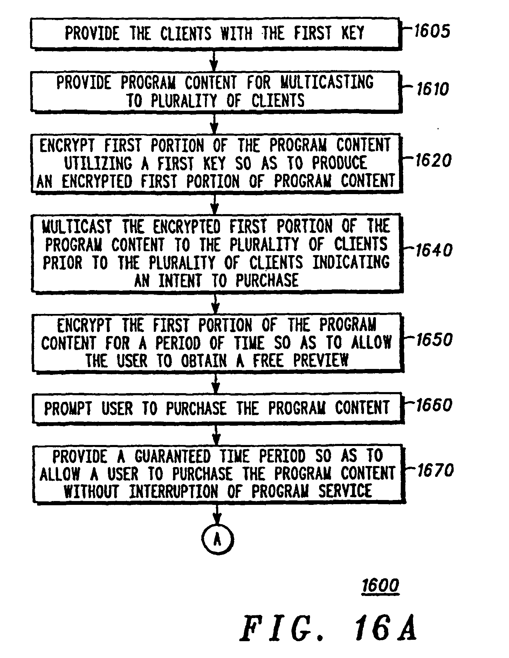

For some multicast events, such as pay per view events, it is expected that a system will experience the biggest load, that is traffic requesting program keys, very close to the scheduled beginning of a program. If the population of clients joining a multicast session is very large, a server will be unable to distribute keys to all participants instantly. Therefore, a system is needed to allow viewers to receive the beginning of a program during this period when the server is distributing keys to those who have purchased the program material. Fig. 15 illustrates one embodiment of a method for distributing keys during an initial viewing period.

One method of implementing an initial viewing period is to distribute a common key to potential participants ahead of time, e.g., prior to distribution of program content. Such a key is referred to herein as a group key. A group key may be given to clients when they request a particular caching server or it may be a truly global key obtained by clients when they are initialized in the distribution system during provisioning. Since every client would receive a group key in such a situation, all clients could, in theory, receive the first part of the content for free. Fig. 15 illustrates a flow chart 1500 for implementing one embodiment of the invention. In block 1510 of Fig. 15, a first key, such as a group key, is provided to clients. In block 1520 a second key is provided for use in decrypting a first portion of the program content. Such a key could be referred to as a content key. The second key is provided to at least one of the plurality of clients encrypted under the second key as shown in block 1530. This second key can be encrypted by the group key prior to distribution to the clients. In block 1540, this second key is utilized at the server to encrypt a first portion of the program content. The encrypted first portion of the program content is then distributed to the group of clients as shown in block 1550. Therefore, the client who received the second key is able to decrypt the encrypted program contents. Namely, the clients can decrypt the content key utilizing the group key and then utilize the content key to decrypt the encrypted program content. This is shown by block 1560.

Thus, when a multicast event starts the initial content key can be distributed under the group key as well as the program key for pay per view events or a first program segment key for pay by time events (the PSK can be encrypted under the GK, as well). Since the group key is distributed ahead of time, clients will not have to wait to receive the program key or the program segment key that will eventually be distributed to them. Rather, the server sets the duration of the initial viewing period based on expected demand for the program contents by the clients, w'hich also may be adjusted dynamically based on the instantaneous load of clients who are purchasing the program over time. Thus, the server can adjust in real time based on the demand for a particular program. Note that an initial viewing period can be composed of "N" content key periods, rather than determined as a single interval. In this case, the server may adjust N dynamically.

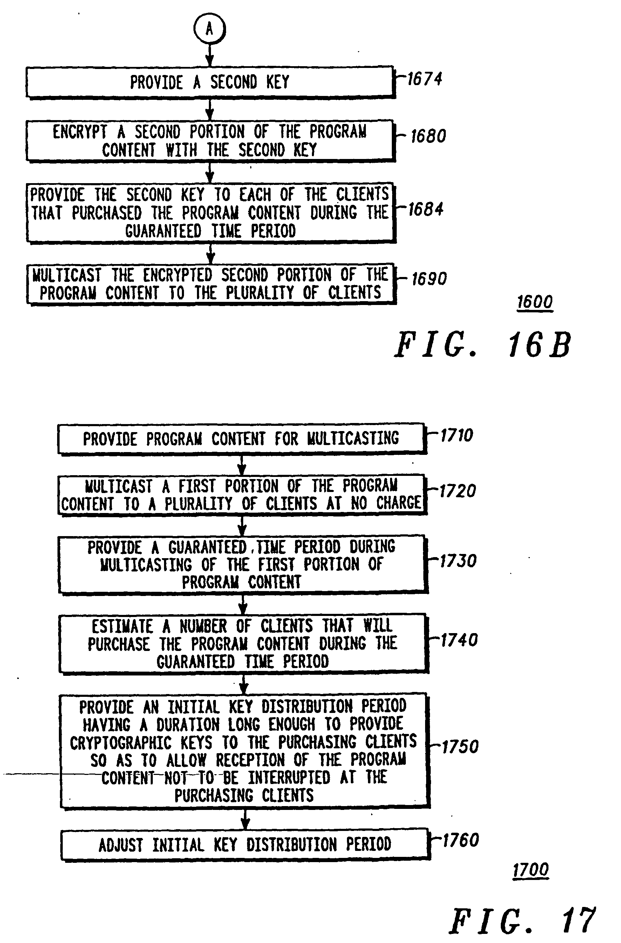

Figs. 16A and 16B illustrate a flow chart 1600 for implementing an embodiment of the invention. In block 1610 program content is provided for multicasting to a plurality of clients. A first portion of the program content is encrypted utilizing a first key, such as a group key, to produce an encrypted first portion of the program content in block 1620. In block I630, clients are provided with this first key for use in decrypting the program content, typically, ahead of time, e.g., during provisioning. In block 1640 the encrypted first portion of the program content is multicast to the clients prior to purchase by those clients. In block 1650 the first portion of the program content is encrypted for a period of time to allow a user to obtain an initial viewing of the program content since this first portion can be decrypted by the previously distributed group key, for example. This period of time can be predetermined based on expected demand for the program. In block 1660 the user is prompted to purchase the program content, for example, through a user interface at the client at the end of the free preview period. Then, block 1670 shows that a guaranteed time period is provided to allow a user to purchase the program content without program service being interrupted. Thus, if a user purchases the program during the guaranteed time period, the user can expect to receive the necessary keys in a timely fashion so that loss of the program viewing does not occur. In block 1674 a server generates the second key, which is then used to encrypt a second portion of the program content as shown in block 1680. A second key is also provided to each of the clients that purchased the program content during the guaranteed time period as shown in block 1684. For example, a program key can be distributed to the client upon purchase of the program key. This program key can then be utilized to decrypt the second key when the second key is transmitted to the client. Thus in block 1690 the encrypted second portion of the program content is multicasted to the plurality of clients. Thus, those clients that purchased the program content and received the second key are able to decrypt the second portion of the program content

Fig. 7B shows the guaranteed time period in one example of the invention. In Fig. 7B, the guaranteed time period is shown during which the group key can be utilized to decrypt a content key which is utilized to decrypt encrypted program content. Any user that purchases the program content during the guaranteed period will receive the next necessary decryption key within the initial key distribution. Thus the initial key distribution period is shown lasting longer than the guaranteed period so as to allow a key to be distributed to a client that purchased during the guaranteed period. Thus content key (CK1) is shown lasting for the entire initial key distribution period. Thus, the next content key will have been obtained by a purchasing user prior to the initial key distribution period elapsing.

Thus, to provide a satisfying user experience, all clients who request access to an event (e.g., they request a program key for a pay per view event) during the "guaranteed period" will be guaranteed to receive the content without interruption. This means that the server will not stop distributing content keys under the group key until all clients whose requests were received during the guaranteed period have the program key distributed to them. Again, this is called the initial viewing period, or equivalently, the initial key distribution period.

Clients who request the content after the guarantee period, already missed the beginning of the movie for example; therefore, the delivery of the program key or program segment key is not as critical and a slight delay is tolerable to those viewers. In fact, it is likely preferable that a user start later a continuous viewing experience rather than start earlier a viewing experience that will be temporarily interrupted.

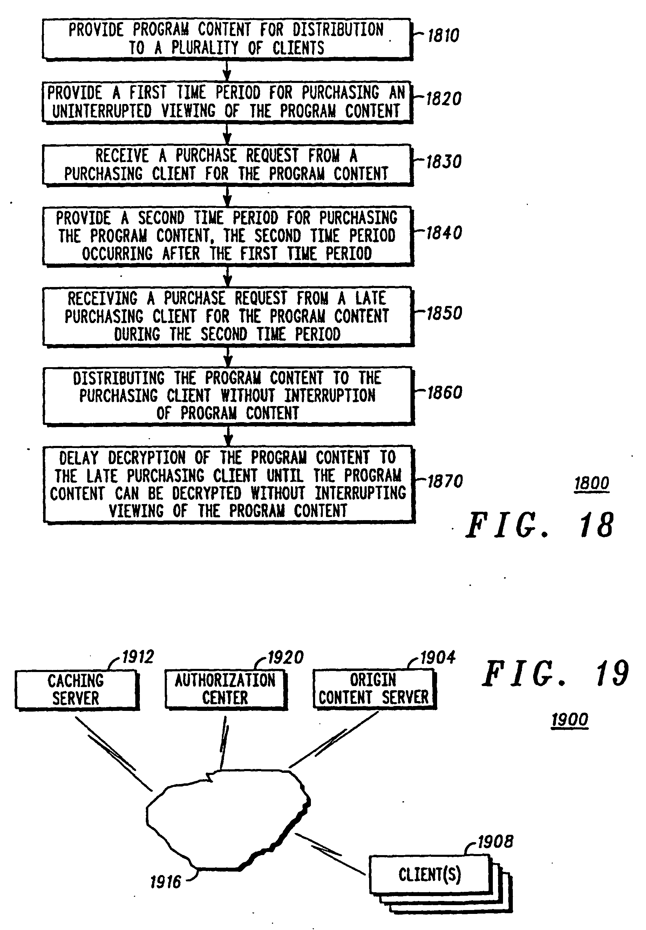

As noted earlier, the initial key distribution period may be initially set based on the predicted popularity of a particular program and then modified by the server to adjust to the current load. Thus, based on the number of requests or the performance of the server computer, the distribution period can be extended. Fig. 17 illustrates a method for one embodiment of the invention for accomplishing this. In block 1710 program content is provided for multicasting. In block 1720 a first portion of the program content is multicast to a plurality of clients at no charge. A guaranteed time period is provided during the multicasting of the first portion of the program content as shown in block 1730. Block 1740 shows that the number of clients that will purchase the program content during the guaranteed time period is estimated. In block 1750 an initial key distribution period is provided having a duration long enough to provide cryptographic keys to the purchasing clients so as to prevent reception of the program content from being interrupted at the purchasing clients. In block 1760 the initial key distribution period is adjusted. The adjustment of the initial key distribution period can occur, for example, by simply extending the initial key distribution period. Thus, a content key can be utilized for encrypting the program content for a period of time that accommodates the additional load of viewers purchasing the content. Furthermore, the actual number of purchasing clients can be determined and compared to the estimated number of clients that were expected to purchase the program content. The initial key distribution period can be extended based on the additional load of clients. Furthermore, the delay may be due to a load on the server or network in which the performance of those components can be analyzed and the initial distribution period adjusted accordingly.

Fig. 18 illustrates a method 1800 for allowing users to purchase content after expiration of the guaranteed time period described above. In block 1810 program content is provided for distribution for a plurality of clients. A first time period for purchasing an uninterrupted viewing of the program content is provided in block 1820. Thus, this accords with the guaranteed time period described earlier. A purchase request from a purchasing client for the program content is received as shown in block 1830 during the first time period. A second time period is provided for purchasing the program content in which the second time period occurs after the first time period as illustrated in block 1840. A purchase request from a late purchasing client is received during this second time period as shown in block 1850. The program content is distributed to the purchasing client without interruption of viewing of the program content as shown in block 1860 while delay of decryption of the program content distributed to the late purchasing client occurs until that program content can be decrypted without interrupting viewing by the late purchasing client. This is shown in block 1870. Thus, this method can delay communicating a key to a late purchasing client until the server determines that the late purchasing client will receive a key necessary for uninterrupted viewing of the program content.

### Content Rights and Conditions

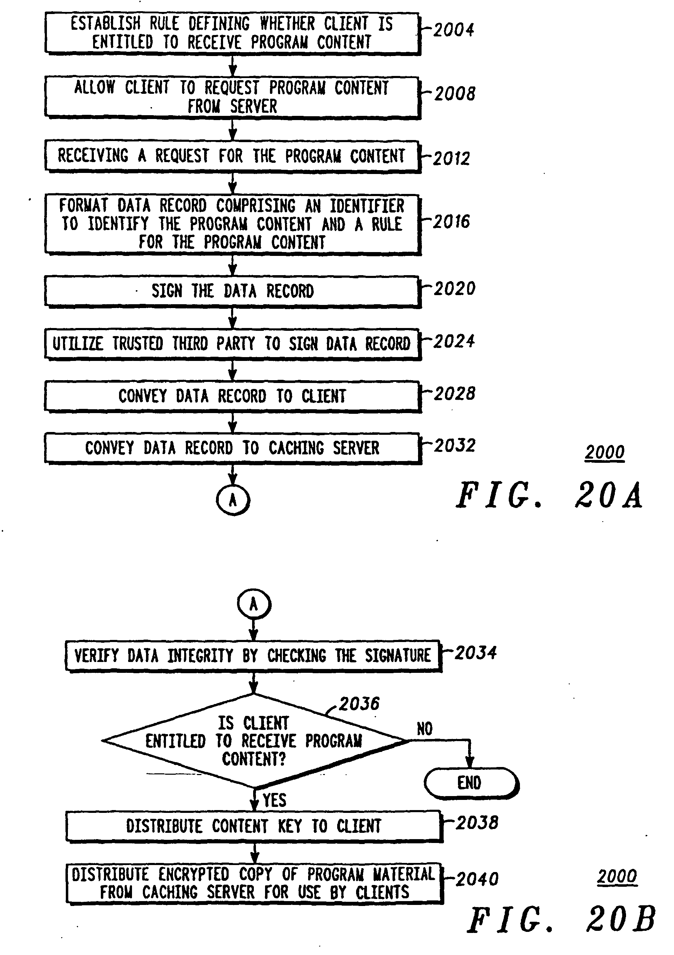

Referring to Fig. 19 a system can be seen for implementing rules and conditions for providing content in a multicasting environment. System 1900 shows a client server network comprised of at least one client 1908 coupled to a server such as origin content server 1904 via a network 1916 such as the internet. In addition, Fig.19 shows a caching server 1912 and an authorization center 1920 also coupled to the network. The origin content server is intended to illustrate a server which stores or controls access to program content. For example, such content could be multimedia or it could be a movie for distribution via a webcasting system. The caching server 1912 can be utilized in this multicasting environment to store a copy of the program content that originated on the origin content server.

In one embodiment of the invention, a client registers with the authorization center 1920 to obtain a ticket which defines what type of content the client is entitled to obtain. Thus, when a client desires to obtain content, a variety of procedures can be implemented to confirm whether the client is entitled to receive that particular program content. At least three options for obtaining the program content could be utilized. For example, the content provider for origin content server 1904 in Fig. 19 could perform the checking. Alternatively, the caching server 1912 in Fig. 19 could perform the checking routine; or, the checking could be performed at the client itself.

In the case in which the origin content server performs the checking, the origin content server analyzes the client's request for program content and checks with the authorization center to determine whether the client is authorized for that particular content. This method allows an early decision to be made especially if access is to be denied to the client, which eliminates further processing and possibly viewer frustration in being denied access to the content.

Alternatively, the checking could be performed at the client itself. For example, the client could be fashioned with a hardware security device or security chip which could enforce the rules which are distributed to each individual client. Thus the rules used by this hardware security device could be compared with the client's viewing entitlements or other attributes such as the client's physical location, such as the country in which the client is located. Such physical location can be important as different countries have various laws in regard to what type of program content can be distributed.

Yet another embodiment of the invention allows the checking to be performed at the caching server. The caching server can compare the content rules with the client's entitlements and securely enforce the rules. The client's entitlements can be securely contained in a data record (ticket) which the client presents to the caching server or which the caching server receives through other means. The rules can be distributed to the caching server from the origin server. Furthermore, the purchase option can be distributed from the origin server to the client, and the client can then convey the purchase option to the caching server.

In addition to comparing content rules to a user's (client's) entitlements, the user's selected purchase option can also be compared to the rules in making the authorization decision.

Figs. 20A and 20B illustrate a method 2000 for implementing one embodiment of the invention. In block 2004 of Fig. 20A, a rule is established defining whether a client is entitled to receive program content. The client is allowed to request program content from a server such as the origin content server 1904 in Fig. 19. This is illustrated by block 2008. In block 2012, a request is received for the program content. For example, the client can request the program content from the origin content server. In block 2016 a data record is formatted by the origin server which comprises an identifier to identify the program content, as well as rules defining who may access the program content and the purchasing option selected by the user. In block 2020 the data record can be signed and encrypted, becoming a secure object. Block 2024 illustrates that a trusted third party can be utilized to sign the data record. For example, such a trusted third party could be used to issue a signing key to the origin content server for use in signing the data record. Similarly, the same trusted third party could be utilized to provide a verification key to a caching server which will later use the authenticated data record. In block 2028 the data record is shown as being conveyed to the client. The client can then convey the data record to the caching server as shown in block 2032 where the data integrity is verified by checking the signature, as shown in block 2034. Alternatively, the data record could be conveyed directly to the caching server from the origin content server without going through the client. In block 2036 in Fig. 20B, a determination is made at the caching server as to whether the client is entitled to receive the program content. The caching server can utilize the data record, which contains the rule defining who is entitled to receive the program content, and the server may also utilize the entitlements particular to the client requesting the program content. Through this determination, the caching server can determine whether or not to provide the program content key for use by the client. The caching server also distributes its encrypted copy of the program content material for use by the client (or plurality of clients) as illustrated in block 2040.

Another embodiment of the invention illustrated from the perspective of the caching server is shown in Fig. 21. In flowchart 2100 of Fig. 21, the caching server receives a program content identifier from a client, as illustrated by block 2110. This program content identifier can be used to identify the specific program content that the user of the client computer desires to obtain. Block 2120 illustrates that the user's selected payment method is also communicated to the server. For example, the payment method negotiated by the client with the origin server can be communicated to the caching server. In block 2130, the rule(s) associated with the program content are obtained by the caching server for use in determining whether the client is entitled to the program content. The program content identifier, the user's selected payment method, and the rules associated with the program content can all be communicated to the caching server in a secure object sent by the client to the caching server. This secure object or data record can then be parsed by the caching server so as to obtain the relevant information. In addition, a ticket can be obtained from the client, as shown in block 2140. Note that blocks 2110, 2120, 2130 and 2140 may occur in any order relative to each other. This ticket is comprised of entitlement information that can be use to determine whether the client is entitled to receive the program content. For example, the ticket can store a list of services to which the client is subscribed, the client's location, e.g., in the United States, the client's ability to pay for content, etc. Such ticket information can be compared to the rules obtained by the caching server to determine whether the client is entitled to the program content, as indicated in block 2150. If the client is entitled to receive the program content, a key can be conveyed to the client for direct or indirect use in decrypting the encrypted program content, as shown in block 2160. If the client is not entitled to the program content, then no such key needs to be distributed. Thus, for clients that are entitled to and receive the key for the program content, the multicast of the program content can be decrypted with the received key.

The caching server can compare the content rules for program material with each client's entitlements and securely enforce the rules. The client's entitlements can be securely contained in a data record which the client presents to the caching server when it requests specific content. Content rules can be delivered in at least two ways. For example, content rules can be delivered directly to the caching server, e.g. together with the content. In this way, the rules are sent only once to each caching server. In the case of the subscription purchase of program material, a viewer is not required to negotiate each piece of content individually since it has been included in his or her subscription agreement. When a viewer does need to select purchase options, such as pay per view or pay per time, the viewer negotiates them with the origin content server. The selected purchase options are signed and encrypted and delivered to the client (independent of the delivery mechanism for content rules), for example, and then included in the request sent by the client to the caching server. Since the selected purchase options are encrypted under a key that is known to the caching server but not to the client they will not be modified by the client. Alternatively, content rules can be created by the content provider, i.e., origin content server when the client negotiates access to the content with the origin content server. Such rules may be combined with the specific purchase options that the viewer selected, such as pay per view or pay per time. Content rules in combination with the selected purchase options can then be signed and encrypted and delivered to the client, for example, and then be included in the request sent by the client to the caching server. Since the content rules are encrypted under a key that is known to the caching server but not to the client they will not be modified by the client. This approach removes the need for a direct interface between an origin content server and a caching server for the delivery of content rules.

In negotiating a purchase between the origin content server and the client, the origin content server will maintain the rules and purchase option information locally. It can then offer the client all the different purchase options so as to allow the client to make a decision. Thus, the purchase option can be encapsulated into the secure data record which is passed back to the client. The client can then forward the secure data record to the appropriate caching server together with the client ticket which includes the client's entitlement information (e.g., capability to purchase, list of subscribed services, etc.). The client in Fig. 19 can obtain the entitlement information from the authorization center 1920 when the client registers with the multicasting system.

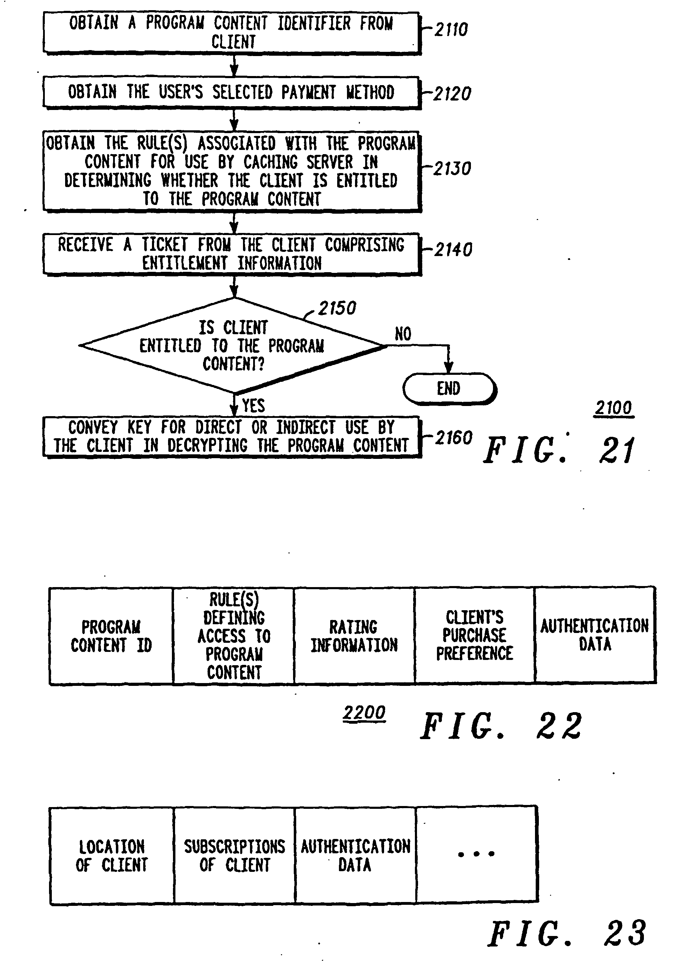

Fig. 22 illustrates a data record which can be provided by the origin content server. This data record can be encrypted prior to conveyance to the client or to the caching server. Fig. 22 illustrates different fields which can be utilized as part of the data record. Thus Fig. 22 shows fields for program content ID which will identify the specific program content such as the name of a movie. In addition, data record 2200 can contain a field for storing a rule defining who has access to the program content. In the embodiment shown in Fig. 22, a rating information field is also shown which can conform to a particular rating standard. Also, a field could be provided as shown in Fig. 22 to store the client's purchase preference (selection) such as pay per view or pay by time which was negotiated by the client and the origin content server. Fig. 22 also shows an authentication field, which prevents the client from modifying the data record.

Fig. 23 illustrates a data record which can be provided for an individual client. Such a data record can be utilized to define the particular client's entitlements to different program content. Thus, for example, Fig. 23 shows a data record comprised of a field for identifying the location of a client, such as the country in which the client is located. Also shown is a field which identifies subscriptions to which the client has subscribed, e.g. HBO™ or SHOWTIME™. Additional fields could be presented as well. This information could be authenticated and encrypted so that the client cannot revise his own entitlements.

While various embodiments of the invention have been described as methods or apparatus for implementing the invention, it should be understood that the invention can be implemented through code coupled to a computer, e.g., code resident on a computer or accessible by the computer. For example, software and databases could be utilized to implement many of the methods discussed above. Thus, in addition to embodiments where the invention is accomplished by hardware, it is also noted that these embodiments can be accomplished through the use of an article of manufacture comprised of a computer usable medium having a computer readable program code embodied therein, which causes the enablement of the functions disclosed in this description. Therefore, it is desired that embodiments of the invention also be considered protected by this patent in their program code means as well.

It is also envisioned that embodiments of the invention could be accomplished as computer signals embodied in a carrier wave, as well as signals (e.g., electrical and optical) propagated through a transmission medium. Thus, the various information discussed above could be formatted in a structure, such as a data structure, and transmitted as an electrical signal through a transmission medium or stored on a computer readable medium.

It is also noted that many of the structures, materials, and acts recited herein can be recited as means for performing a function or steps for performing a function. Therefore, it should be understood that such language is entitled to cover all such structures, materials, or acts disclosed within this specification and their equivalents.

## Claims

1. A method of multicasting comprising:
providing (1610) program content for multicasting to a plurality of clients;
encrypting (1620) a first portion of said program content by utilizing a first key so as to produce an encrypted first portion of said program content;
providing (1605) said plurality of clients with said first key;
multicasting (1640) said encrypted first portion of said program content to said plurality of clients prior to said plurality of clients indicating an intent to purchase said program content,
**characterized by**:
providing (1670) a guaranteed time period during multicasting of said encrypted first portion of said program content so as to allow a client to purchase said program content without presentation of said program content being interrupted.

2. The method as described in claim 1, and further comprising:
encrypting (1650) said first portion of said program content with said first key for a predetermined period of time so as to allow a user to obtain a free preview of said program content.

3. The method as described in any of claims 1 or 2, and further comprising:
prompting (1660) a user to purchase said program content.

4. The method as described in claim 1, and further comprising:
providing (1674) a second key;
encrypting (1680) a second portion of said program content with said second key so as to produce an encrypted second portion of said program content;
providing (1684) said second key to each of said clients that purchased said program content during said guaranteed time period, wherein said second key is operable to decrypt said encrypted second portion of said program content; and then
multicasting (1690) said encrypted second portion of said program content to said plurality of clients.

5. The method as described in claim 4, wherein said second key is encrypted under a third key and wherein said third key is provided to a purchasing client after purchase of said program content.

6. The method of claim 1, further comprising:
said multicasting said encrypted first portion of said program content to said plurality of clients at no charge;
estimating (1740) a number of clients that will purchase said program content during said guaranteed time period;
receiving orders for said program content from at least one purchasing client during said guaranteed time period;
providing (1750) an initial key distribution period having a duration operable to provide cryptographic keys to said at least one purchasing client so as to allow reception of said program content not to be interrupted at said at least one purchasing client.

7. The method as described in claim 6, and further comprising:
adjusting (1760) said initial key distribution period.

8. The method as described in claim 7, wherein said adjusting said initial key distribution period comprises:
extending said initial key distribution period.

9. The method as described in any of claims 6, 7 or 8, and further comprising:
determining an actual number of purchasing clients;
determining that said actual number of purchasing clients is greater than said estimated number of clients;
extending said initial key distribution period so as to allow presentation of said program content not to be interrupted at said at least one purchasing client.

10. A computer-readable medium having computer-executable code for performing a method comprising:
providing (1610) program content for multicasting to a plurality of clients;
encrypting (1620) a first portion of said program content by utilizing a first key so as to produce an encrypted first portion of said program content;
providing (1605) said plurality of clients with said first key;
multicasting (1640) said encrypted first portion of said program content to said plurality of clients prior to said plurality of clients indicating an intent to purchase said program content,
**characterized by**:
providing (1670) a guaranteed time period during multicasting of said encrypted first portion of said program content so as to allow a client to purchase said program content without presentation of said program content being interrupted.

11. The computer-readable medium as described in claim 10, and further comprising computer-executable code operable for performing:
encrypting (1650) said first portion of said program content with said first key for a predetermined period of time so as to allow a user to obtain a free preview of said program content.

12. The computer-readable medium as described in any of claims 10 or 11, and further comprising computer-executable code operable for performing:
prompting (1660) a user to purchase said program content.

13. The computer-readable medium as described in claim 10, and further comprising computer-executable code operable for performing:
providing (1674) a second key;
encrypting (1680) a second portion of said program content with said second key so as to produce an encrypted second portion of said program content;
providing (1684) said second key to each of said clients that purchased said program content during said guaranteed time period, wherein said second key is operable to decrypt said encrypted second portion of said program content; and then
multicasting (1690) said encrypted second portion of said program content to said plurality of clients.

14. The computer readable medium as described in claim 13, and further comprising computer-executable code for encrypting said second key under a third key and providing said third key to a purchasing client after purchase of said program content.

15. The computer-readable medium having computer-executable code for performing method of claim 10 and further comprising:
said multicasting said encrypted first portion of said program content to said plurality of clients being at no charge;
estimating (1740) a number of clients that will purchase said program content during said guaranteed time period;
receiving orders for said program content from at least one purchasing client during said guaranteed time period;
providing (1750) an initial key distribution period having a duration operable to provide cryptographic keys to said at least one purchasing client so as to allow reception of said program content not to be interrupted at said at least one purchasing client.

16. The computer-readable medium as described in claim 15, and further comprising computer-executable code operable for performing:
adjusting (1760) said initial key distribution period.

17. The computer-readable medium as described in claim 16, and further comprising computer-executable code operable for performing:
extending said initial key distribution period.

18. The computer-readable medium as described in any of claims 15, 16 or 17, and further comprising computer-executable code operable for performing:
determining an actual number of purchasing clients;
determining that said actual number of purchasing clients is greater than said estimated number of clients;
extending said initial key distribution period so as to allow presentation of said program content not to be interrupted at said at least one purchasing client.

## Patentansprüche

1. Ein Verfahren des Sammelsendens, das Folgendes umfasst:
Bereitstellen (1610) eines Programminhalts zum Sammeisenden an eine Vielzahl von Kunden;
Verschlüsseln (1620) eines ersten Abschnitts des Programminhalts durch Nutzung eines ersten Schlüssels, um einen verschlüsselten ersten Abschnitt des Programminhalts zu produzieren;
Versehen (1605) der Vielzahl von Kunden mit dem ersten Schlüssel;
Sammelsenden (1640) des verschlüsselten ersten Abschnitts des Programminhalts an die Vielzahl von Kunden, bevor die Vielzahl von Kunden ihre Absicht angeben, den Programminhalt zu erwerben,
**gekennzeichnet durch:**
Bereitstellen (1670) eines garantierten Zeitraums während des Sammelsendens des verschlüsselten ersten Abschnitts des Programminhalts, um es einem Kunden zu ermöglichen, den Programminhalt zu erwerben, ohne dass die Präsentation des Programminhalts unterbrochen wird.

2. Verfahren wie in Anspruch 1 beschrieben, und das ferner Folgendes umfasst:
Verschlüsseln (1650) des ersten Abschnitts des Programminhalts mit dem ersten Schlüssel über einen vorbestimmten Zeitraum, um es einem Benutzer zu ermöglichen, eine kostenlose Vorschau des Programminhalts zu erhalten.

3. Verfahren wie in einem der Ansprüche 1 oder 2 beschrieben, und das ferner Folgendes umfasst:
Auffordern (1660) eines Benutzers, den Programminhalt zu erwerben.

4. Verfahren wie in Anspruch 1 beschrieben, und das ferner Folgendes umfasst:
Bereitstellen (1674) eines zweiten Schlüssels;
Verschlüsseln (1680) eines zweiten Abschnitts des Programminhalts mit dem zweiten Schlüssel, um einen verschlüsselten zweiten Abschnitt des Programminhalts zu produzieren;
Versehen (1684) jedes der Kunden, die den Programminhalt in dem garantierten Zeitraum erworben haben, mit dem zweiten Schlüssel, wobei der zweite Schlüssel betriebsfähig ist, den verschlüsselten zweiten Abschnitt des Programminhalts zu entschlüsseln; und dann
Sammelsenden (1690) des verschlüsselten zweiten Abschnitts des Programminhalts an die Vielzahl von Kunden.

5. Verfahren wie in Anspruch 4 beschrieben, wobei der zweite Schlüssel unter einem dritten Schlüssel verschlüsselt ist und wobei der dritte Schlüssel einem erwerbenden Kunden nach dem Erwerb des Programminhalts bereitgestellt wird.

6. Verfahren gemäß Anspruch 1, das ferner Folgendes umfasst:
das Sammelsenden des verschlüsselten ersten Abschnitts des Programminhalts an die Vielzahl von Kunden ohne Gebühr;
Einschätzen (1740) einer Anzahl Kunden, die den Programminhalt in dem garantierten Zeitraum erwerben werden;
Empfangen von Aufträgen für den Programminhalt von mindestens einem erwerbenden Kunden in dem garantierten Zeitraum;
Bereitstellen (1750) einer anfänglichen Schlüsselverteilungsperiode mit einer Dauer, die betriebsfähig ist, um den mindestens einen erwerbenden Kunden mit kryptographischen Schlüsseln zu versehen, um es zu ermöglichen, dass der Empfang des Programminhalts bei dem mindestens einen erwerbenden Kunden nicht unterbrochen wird.

7. Verfahren wie in Anspruch 6 beschrieben, und das ferner Folgendes umfasst:
Einstellen (1760) der anfänglichen Schlüsselverteilungsperiode.

8. Verfahren wie in Anspruch 7 beschrieben, wobei das Einstellen der anfänglichen Schlüsselverteilungsperiode Folgendes umfasst:
Verlängern der anfänglichen Schlüsselverteilungsperiode.

9. Verfahren wie in einem der Ansprüche 6, 7 oder 8 beschrieben, und das ferner Folgendes umfasst:
Bestimmen einer tatsächlichen Anzahl erwerbender Kunden;
Bestimmen, dass die tatsächliche Anzahl erwerbender Kunden größer als die eingeschätzte Anzahl Kunden ist;
Verlängern der anfänglichen Schlüsselverteilungsperiode, um es zu ermöglichen, dass die Präsentation des Programminhalts bei dem mindestens einen erwerbenden Kunden nicht unterbrochen wird.

10. Ein maschinenlesbares Medium mit einem maschinenausführbaren Code zum Durchführen eines Verfahrens, das Folgendes umfasst:
Bereitstellen (1610) eines Programminhalts zum Sammelsenden an eine Vielzahl von Kunden;
Verschlüsseln (1620) eines ersten Abschnitts des Programminhalts durch Nutzung eines ersten Schlüssels, um einen verschlüsselten ersten Abschnitt des Programminhalts zu produzieren;
Versehen (1605) der Vielzahl von Kunden mit dem ersten Schlüssel;
Sammelsenden (1640) des verschlüsselten ersten Abschnitts des Programminhalts an die Vielzahl von Kunden, bevor die Vielzahl von Kunden ihre Absicht angeben, den Programminhalt zu erwerben,
**gekennzeichnet durch**:
Bereitstellen (1670) eines garantierten Zeitraums während des Sammelsendens des verschlüsselten ersten Abschnitts des Programminhalts, um es einem Kunden zu ermöglichen, den Programminhalt zu erwerben, ohne dass die Präsentation des Programminhalts unterbrochen wird.

11. Maschinenlesbares Medium wie in Anspruch 10 beschrieben, und das ferner einen maschinenausführbaren Code umfasst, der betriebsfähig ist, um Folgendes durchzuführen:
Verschlüsseln (1650) des ersten Abschnitts des Programminhalts mit dem ersten Schlüssel über einen vorbestimmten Zeitraum, um es einem Benutzer zu ermöglichen, eine kostenlose Vorschau des Programminhalts zu erhalten.

12. Maschinenlesbares Medium wie in einem der Ansprüche 10 oder 11 beschrieben, und das ferner einen maschinenausführbaren Code umfasst, der betriebsfähig ist, um Folgendes durchzuführen:
Auffordern (1660) eines Benutzers, den Programminhalt zu erwerben.

13. Maschinenlesbares Medium wie in Anspruch 10 beschrieben, und das ferner einen maschinenausführbaren Code umfasst, der betriebsfähig ist, um Folgendes durchzuführen:
Bereitstellen (1674) eines zweiten Schlüssels;
Verschlüsseln (1680) eines zweiten Abschnitts des Programminhalts mit dem zweiten Schlüssel, um einen verschlüsselten zweiten Abschnitt des Programminhalts zu produzieren;
Versehen (1684) jedes der Kunden, die den Programminhalt in dem garantierten Zeitraum erworben haben, mit dem zweiten Schlüssel, wobei der zweite Schlüssel betriebsfähig ist, den verschlüsselten zweiten Abschnitt des Programminhalts zu entschlüsseln; und dann
Sammelsenden (1690) des verschlüsselten zweiten Abschnitts des Programminhalts an die Vielzahl von Kunden.

14. Maschinenlesbares Medium wie in Anspruch 13 beschrieben, und das ferner einen maschinenausführbaren Code zum Verschlüsseln des zweiten Schlüssels unter einem dritten Schlüssel und Versehen eines erwerbenden Kunden mit dem dritten Schlüssel nach dem Erwerb des Programminhalts umfasst.

15. Maschinentesbares Medium mit einem maschinenausführbaren Code zum Durchführen des Verfahrens aus Anspruch 10, und das ferner Folgendes umfasst:
dass das Sammelsenden des verschlüsselten ersten Abschnitts des Programminhalts an die Vielzahl von Kunden ohne Gebühr ist;
Einschätzen (1740) einer Anzahl Kunden, die den Programminhalt in dem garantierten Zeitraum erwerben werden;
Empfangen von Aufträgen für den Programminhalt von mindestens einem erwerbenden Kunden in dem garantierten Zeitraum;
Bereitstellen (1750) einer anfänglichen Schlüsselverteilungsperiode mit einer Dauer, die betriebsfähig ist, um den mindestens einen erwerbenden Kunden mit kryptographischen Schlüsseln zu versehen, um es zu ermöglichen, dass der Empfang des Programminhalts bei dem mindestens einen erwerbenden Kunden nicht unterbrochen wird.

16. Maschinenlesbares Medium wie in Anspruch 15 beschrieben, und das ferner einen maschinenausführbaren Code umfasst, der betriebsfähig ist, um Folgendes durchzuführen:
Einstellen (1760) der anfänglichen Schlüsselverteilungsperiode.

17. Maschinenlesbares Medium wie in Anspruch 16 beschrieben, und das ferner einen maschinenausführbaren Code umfasst, der betriebsfähig ist, um Folgendes durchzuführen:
Verlängern der anfänglichen Schlüsselverteilungsperiode.

18. Maschinenlesbares Medium wie in einem der Ansprüche 15, 16 oder 17 beschrieben, und das ferner einen maschinenausführbaren Code umfasst, der betriebsfähig ist, um Folgendes durchzuführen:
Bestimmen einer tatsächlichen Anzahl erwerbender Kunden;
Bestimmen, dass die tatsächliche Anzahl erwerbender Kunden größer als die eingeschätzte Anzahl Kunden ist;
Verlängern der anfänglichen Schlüsselverteilungsperiode, um es zu ermöglichen, dass die Präsentation des Programminhalts bei dem mindestens einen erwerbenden Kunden nicht unterbrochen wird.

## Revendications

1. Une méthode de multidiffusion comportant :
la fourniture (1610) d'un contenu de programme destiné à être multidiffusé à l'intention d'une pluralité de clients ;
le cryptage (1620) d'une première portion dudit contenu de programme en utilisant une première clé de façon à produire une première portion cryptée dudit contenu de programme ;
la fourniture (1605) à ladite pluralité de clients de ladite première clé;
la multidiffusion (1640) de ladite première portion cryptée dudit contenu de programme à l'intention de ladite pluralité de clients avant que ladite pluralité de clients n'indiquent une intention d'acheter ledit contenu de programme,
**caractérisée par** :
la fourniture (1670) d'une période de temps garantie durant la multidiffusion de ladite première portion cryptée dudit contenu de programme de façon à permettre à un client d'acheter ledit contenu de programme sans que la présentation dudit contenu de programme soit interrompue.

2. La méthode telle que décrite dans la revendication 1, et comportant de plus :
le cryptage (1650) de ladite première portion dudit contenu de programme avec ladite première clé pour une période de temps prédéterminée de façon à permettre à un utilisateur d'obtenir une prévisualisation gratuite dudit contenu de programme.

3. La méthode telle que décrite dans n'importe lesquelles des revendications 1 et 2, et comportant de plus :
l'invitation (1660) d'un utilisateur à acheter ledit contenu de programme.

4. La méthode telle que décrite dans la revendication 1, et comportant de plus :
la fourniture (1674) d'une deuxième clé ;
le cryptage (1680) d'une deuxième portion dudit contenu de programme avec ladite deuxième clé de façon à produire une deuxième portion cryptée dudit contenu de programme ;
la fourniture (1684) de ladite deuxième clé à chacun desdits clients qui ont acheté ledit contenu de programme durant ladite période de temps garantie, dans laquelle ladite deuxième clé est exploitable pour décrypter ladite deuxième portion cryptée dudit contenu de programme ; et ensuite
la multidiffusion (1690) de ladite deuxième portion cryptée dudit contenu de programme à l'intention de ladite pluralité de clients.

5. La méthode telle que décrite dans la revendication 4, dans laquelle ladite deuxième clé est cryptée sous une troisième clé et dans laquelle ladite troisième clé est fournie à un client acheteur après l'achat dudit contenu de programme.

6. La méthode de la revendication 1, comportant de plus :
ladite multidiffusion sans frais de ladite première portion cryptée dudit contenu de programme à l'intention de ladite pluralité de clients ;
l'estimation (1740) d'un nombre de clients qui achèteront ledit contenu de programme durant ladite période de temps garantie ;
la réception de commandes pour ledit contenu de programme provenant au moins d'un client acheteur durant ladite période de temps garantie ;
la fourniture (1750) d'une période initiale de distribution de clés ayant une durée exploitable pour fournir des clés cryptographiques audit au moins un client acheteur de façon à permettre à la réception dudit contenu de programme de ne pas être interrompue au niveau dudit au moins un client acheteur.

7. La méthode telle que décrite dans la revendication 6, et comportant de plus :
l'ajustement (1760) de ladite période initiale de distribution de clés.

8. La méthode telle que décrite dans la revendication 7, dans laquelle ledit ajustement de ladite période initiale de distribution de clés comporte :
la prolongation de ladite période initiale de distribution de clés.

9. La méthode telle que décrite dans n'importe lesquelles des revendications 6, 7 ou 8, et comportant de plus :
la détermination d'un nombre réel de clients acheteurs ;
la détermination que ledit nombre réel de clients acheteurs est supérieur audit nombre estimé de clients ;
la prolongation de ladite période initiale de distribution de clés de façon à permettre à la présentation dudit contenu de programme de ne pas être interrompue au niveau dudit au moins un client acheteur.

10. Un support pouvant être lu par un ordinateur ayant un code exécutable par un ordinateur pour effectuer une méthode comportant :
la fourniture (1610) d'un contenu de programme destiné à être multidiffusé à l'intention d'une pluralité de clients ;
la cryptage (1620) d'une première portion dudit contenu de programme en utilisant une première clé de façon à produire une première portion cryptée dudit contenu de programme ;
la fourniture (1605) à ladite pluralité de clients de ladite première clé ;
la multidiffusion (1640) de ladite première portion cryptée dudit contenu de programme à l'intention de ladite pluralité de clients avant que ladite pluralité de clients n'indiquent une intention d'acheter ledit contenu de programme,
**caractérisé par** :
la fourniture (1670) d'une période de temps garantie durant la multidiffusion de ladite première portion cryptée dudit contenu de programme de façon à permettre à un client d'acheter ledit contenu de programme sans que la présentation dudit contenu de programme soit interrompue.

11. Le support pouvant être lu par un ordinateur tel que décrit dans la revendication 10, et comportant de plus un code exécutable par un ordinateur exploitable pour effectuer :
le cryptage (1650) de ladite première portion dudit contenu de programme avec ladite première clé pour une période de temps prédéterminée de façon à permettre à un utilisateur d'obtenir une prévisualisation gratuite dudit contenu de programme.

12. Le support pouvant être lu par un ordinateur tel que décrit dans n'importe lesquelles des revendications 10 et 11, et comportant de plus un code exécutable par un ordinateur exploitable pour effectuer :
l'invitation (1660) d'un utilisateur à acheter ledit contenu de programme.

13. Le support pouvant être lu par un ordinateur tel que décrit dans la revendication 10, et comportant de plus un code exécutable par un ordinateur exploitable pour effectuer :
la fourniture (1674) d'une deuxième clé ;
le cryptage (1680) d'une deuxième portion dudit contenu de programme avec ladite deuxième clé de façon à produire une deuxième portion cryptée dudit contenu de programme ;
la fourniture (1684) de ladite deuxième clé à chacun desdits clients qui ont acheté ledit contenu de programme durant ladite période de temps garantie, dans laquelle ladite deuxième clé est exploitable pour décrypter ladite deuxième portion cryptée dudit contenu de programme ; et ensuite
la multidiffusion (1690) de ladite deuxième portion cryptée dudit contenu de programme à l'intention de ladite pluralité de clients.

14. Le support pouvant être lu par un ordinateur tel que décrit dans la revendication 13, et comportant de plus un code exécutable par un ordinateur pour crypter ladite deuxième clé sous une troisième clé et fournir ladite troisième clé à un client acheteur après l'achat dudit contenu de programme.

15. Le support pouvant être lu par un ordinateur ayant un code exécutable par un ordinateur pour effectuer la méthode de la revendication 10 et comportant de plus :
ladite multidiffusion sans frais de ladite première portion cryptée dudit contenu de programme à l'intention de ladite pluralité de clients ;
l'estimation (1740) d'un nombre de clients qui achèteront ledit contenu de programme durant ladite période de temps garantie ;
la réception de commandes pour ledit contenu de programme provenant au moins d'un client acheteur durant ladite période de temps garantie ;
la fourniture (1750) d'une période initiale de distribution de clés ayant une durée exploitable pour fournir des clés cryptographiques audit au moins un client acheteur de façon à permettre à la réception dudit contenu de programme de ne pas être interrompue au niveau dudit au moins un client acheteur.

16. Le support pouvant être lu par un ordinateur tel que décrit dans la revendication 15, et comportant de plus un code exécutable par un ordinateur exploitable pour effectuer :
l'ajustement (1760) de ladite période initiale de distribution de clés.

17. Le support pouvant être lu par un ordinateur tel que décrit dans la revendication 16, et comportant de plus un code exécutable par un ordinateur exploitable pour effectuer :
la prolongation de ladite période initiale de distribution de clés.

18. Le support pouvant être lu par ordinateur tel que décrit dans n'importe lesquelles des revendications 15, 16 ou 17, et comportant de plus un code exécutable par un ordinateur exploitable pour effectuer :
la détermination d'un nombre réel de clients acheteurs ;
la détermination que ledit nombre réel de clients acheteurs est supérieur audit nombre estimé de clients ;
la prolongation de ladite période initiale de distribution de clés de façon à permettre à la présentation dudit contenu de programme de ne pas être interrompue au niveau dudit au moins un client acheteur.
